# EUROPEAN PATENT APPLICATION

(11) **EP 4 460 090 A1**
(43) Date of publication of application: **06.11.2024**
(21) Application number: 23742984.0
(22) Date of filing: 19.01.2023
(51) Int. Cl.: H04W 36/30, H04W 76/19, H04W 28/02

(54) **COMMUNICATION METHOD AND APPARATUS**

(30) Priority: 21.01.2022 CN 202210072898; 30.09.2022 CN 202211216403
(71) Applicant: Huawei Technologies Co., Ltd., Shenzhen, Guangdong 518129 (CN)
(72) Inventor: LOU, Chong, Shenzhen, Guangdong 518129 (CN); GU, Zhifang, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2023/073231
(87) International publication number: WO 2023/138669

(57) **Abstract**

This application relates to the field of communication technologies, and discloses a communication method and apparatus. The method includes: After determining that a first cell is a serving cell of a terminal device, an access network device may send N sets of data transmission mode information to the terminal device in the first cell, where N is a positive integer. The N sets of data transmission mode information include first data transmission mode information corresponding to a handover of the terminal device from a second cell to the first cell and/or second data transmission mode information corresponding to a handover of the terminal device from the second cell to a third cell, where the first cell, the second cell, and the third cell are cells managed by the access network device. According to the method, the access network device may send, to the terminal device in the first cell, data transmission mode information corresponding to a handover of the terminal device between a plurality of cells, so that the terminal device can directly use the corresponding data transmission mode information when the terminal device is subsequently handed over between the plurality of cells, to effectively save transmission resources.

## Description

### CROSS-REFERENCE TO RELATED APPLICATIONS

This application claims priority to Chinese Patent Application No. 202210072898.8, filed with the China National Intellectual Property Administration on January 21, 2022 and entitled "COMMUNICATION METHOD AND APPARATUS", which is incorporated herein by reference in its entirety. This application claims priority to Chinese Patent Application No. 202211216403.0, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless communication system, when a terminal device moves, the terminal device may move from coverage of a cell to coverage of another cell. To ensure service continuity and communication quality of the terminal device, the terminal device needs to be handed over between different cells. A cell that provides a service to the terminal device before the terminal device is handed over may be referred to as a source serving cell or a source cell, and a cell that provides a service to the terminal device after the terminal device is handed over may be referred to as a target serving cell or a target cell.

However, to implement a handover of the terminal device between a plurality of cells, information needs to be exchanged between an access network device and the terminal device. This results in high transmission resource consumption. Therefore, for the handover of the terminal device between the plurality of cells, how to reduce transmission resource consumption still needs to be further studied.

### SUMMARY

This application provides a communication method and apparatus, to reduce transmission resource consumption caused by a handover of a terminal device between a plurality of cells.

According to a first aspect, an embodiment of this application provides a communication method. The method may be applied to an access network device or a module in the access network device. An example in which the method is applied to the access network device is used, and cells managed by the access network device include a first cell, a second cell, and a third cell. In the method, the access network device determines that the first cell is a serving cell of a terminal device, and sends N sets of data transmission mode information for the terminal device to the terminal device in the first cell, where N is a positive integer. The N sets of data transmission mode information include first data transmission mode information corresponding to performing a handover of the terminal device from the second cell to the first cell through a cell handover of a first type and/or second data transmission mode information corresponding to performing a handover of the terminal device from the second cell to the third cell through the cell handover of the first type.

According to the foregoing method, the access network device may send, to the terminal device in the first cell, data transmission mode information corresponding to a handover of the terminal device between a plurality of cells, so that the terminal device can directly use the corresponding data transmission mode information when the terminal device is subsequently handed over between the plurality of cells, to effectively reduce transmission resource consumption caused by the handover of the terminal device between the plurality of cells, in other words, save transmission resources.

In a possible design, after the terminal device is handed over from the first cell to the second cell through the cell handover of the first type, the method further includes: sending first indication information to the terminal device in the second cell, where the first indication information indicates the terminal device to perform data transmission with the access network device based on the first data transmission mode information in the N sets of data transmission mode information after the terminal device is handed over from the second cell to the first cell through the cell handover of the first type; or sending second indication information to the terminal device in the second cell, where the second indication information indicates the terminal device to perform data transmission with the access network device based on the second data transmission mode information in the N sets of data transmission mode information after the terminal device is handed over from the second cell to the third cell through the cell handover of the first type.

In a possible design, the method further includes: receiving third indication information and fourth indication information from the terminal device in the first cell, where the third indication information indicates that the terminal device has been handed over from the second cell to the first cell through the cell handover of the first type, and the fourth indication information indicates the access network device to perform data transmission with the terminal device based on the first data transmission mode information in the N sets of data transmission mode information; or receiving fifth indication information and sixth indication information from the terminal device in the third cell, where the fifth indication information indicates that the terminal device has been handed over from the second cell to the third cell through the cell handover of the first type, and the sixth indication information indicates the access network device to perform data transmission with the terminal device based on the second data transmission mode information in the N sets of data transmission mode information.

In a possible design, the method further includes: determining that at least one of the following is met: the terminal device needs to enter an idle mode or an inactive mode, the terminal device needs to be handed over to a fourth cell through a cell handover of a second type, and the N sets of data transmission mode information need to be changed; and releasing the N sets of data transmission mode information, and/or sending seventh indication information to the terminal device, where the seventh indication information indicates the terminal device to release the N sets of data transmission mode information.

In a possible design, the determining that the first cell is a serving cell of a terminal device includes: when the terminal device accesses the first cell in idle mode or inactive mode, determining that the first cell is the serving cell of the terminal device; or when the terminal device is handed over to the first cell through the cell handover of the second type, determining that the first cell is the serving cell of the terminal device.

In a possible design, the cell handover of the second type is a cell handover that is based on a cell-level measurement result.

In a possible design, the first data transmission mode information or the second data transmission mode information includes at least one of the following: first information, where the first information indicates whether to perform packet data convergence protocol PDCP re-establishment; second information, where the second information indicates whether to perform PDCP data recovery; or third information, where the third information indicates whether to send a random access preamble to a target cell to obtain uplink synchronization information for the target cell.

In a possible design, the cell handover of the first type is a cell handover that is based on a beam-level measurement result.

According to a second aspect, an embodiment of this application provides a communication method. The method may be applied to a terminal device or a module in the terminal device. An example in which the method is applied to the terminal device is used. In the method, the terminal device determines that a first cell is a serving cell of the terminal device, and receives N sets of data transmission mode information from an access network device in the first cell, where N is a positive integer. The N sets of data transmission mode information include first data transmission mode information corresponding to performing a handover of the terminal device from a second cell to the first cell through a cell handover of a first type and/or second data transmission mode information corresponding to performing a handover of the terminal device from the second cell to a third cell through the cell handover of the first type, where the first cell, the second cell, and the third cell are cells managed by the access network device (in other words, the first cell, the second cell, and the third cell belong to the access network device).

In a possible design, after the terminal device is handed over from the first cell to the second cell through the cell handover of the first type, the method further includes: receiving first indication information from the access network device in the second cell, where the first indication information indicates the terminal device to perform data transmission with the access network device based on the first data transmission mode information in the N sets of data transmission mode information after the terminal device is handed over from the second cell to the first cell through the cell handover of the first type; or receiving second indication information from the access network device in the second cell, where the second indication information indicates the terminal device to perform data transmission with the access network device based on the second data transmission mode information in the N sets of data transmission mode information after the terminal device is handed over from the second cell to the third cell through the cell handover of the first type.

In a possible design, the method further includes: after the terminal device is handed over from the second cell to the first cell, sending third indication information and fourth indication information to the access network device in the first cell, where the third indication information indicates that the terminal device has been handed over from the second cell to the first cell through the cell handover of the first type, and the fourth indication information indicates the access network device to perform data transmission with the terminal device based on the first data transmission mode information in the N sets of data transmission mode information; or after the terminal device is handed over from the second cell to the third cell, sending fifth indication information and sixth indication information to the access network device in the third cell, where the fifth indication information indicates that the terminal device has been handed over from the second cell to the third cell through the cell handover of the first type, and the sixth indication information indicates the access network device to perform data transmission with the terminal device based on the second data transmission mode information in the N sets of data transmission mode information.

In a possible design, the method further includes: receiving seventh indication information from the access network device, where the seventh indication information indicates the terminal device to release the N sets of data transmission mode information.

In a possible design, the determining that a first cell is a serving cell of the terminal device includes: when the terminal device accesses the first cell in idle mode or inactive mode, determining that the first cell is the serving cell of the terminal device; or when the terminal device is handed over to the first cell through a cell handover of a second type, determining that the first cell is the serving cell of the terminal device.

In a possible design, the cell handover of the second type is a cell handover that is based on a cell-level measurement result.

In a possible design, the first data transmission mode information or the second data transmission mode information includes at least one of the following: first information, where the first information indicates whether to perform PDCP re-establishment; second information, where the second information indicates whether to perform PDCP data recovery; or third information, where the third information indicates whether to send a random access preamble to a target cell to obtain uplink synchronization information for the target cell.

In a possible design, the cell handover of the first type is a cell handover that is based on a beam-level measurement result.

According to a third aspect, an embodiment of this application provides a communication method. The method may be applied to an access network device or a module in the access network device. An example in which the method is applied to the access network device is used. In the method, the access network device determines that a first cell in W cells is a serving cell of a terminal device, where the W cells further include a second cell. The access network device sends N sets of data transmission mode information for the terminal device to the terminal device in the first cell, where the N sets of data transmission mode information include Q 1 sets of data transmission mode information respectively corresponding to performing handovers of the terminal device from cells in Q 1 cell groups to the first cell through a cell handover of a first type and/or Q2 sets of data transmission mode information respectively corresponding to performing handovers of the terminal device from cells in Q2 cell groups to the second cell through the cell handover of the first type, a cell other than the first cell in the W cells belongs to the Q 1 cell group, and a cell other than the second cell in the W cells belongs to the Q2 cell groups, where W, N, Q1, and Q2 are positive integers.

In a possible design, the first cell belongs to a first cell group in the Q2 cell groups, and data transmission mode information corresponding to performing a handover of the terminal device from a cell in the first cell group to the second cell through the cell handover of the first type is third data transmission mode information.

In a possible design, after the terminal device is handed over from the first cell to the second cell through the cell handover of the first type, the method further includes: sending eighth indication information to the terminal device in the second cell, where the eighth indication information indicates the terminal device to perform data transmission with the access network device based on the third data transmission mode information in the N sets of data transmission mode information.

In a possible design, the method further includes: receiving ninth indication information and tenth indication information from the terminal device in the second cell, where the ninth indication information indicates that the terminal device has been handed over from the first cell to the second cell through the cell handover of the first type, and the tenth indication information indicates the access network device to perform data transmission with the terminal device based on the third data transmission mode information in the N sets of data transmission mode information.

According to a fourth aspect, an embodiment of this application provides a communication method. The method may be applied to a terminal device or a module in the terminal device. An example in which the method is applied to the terminal device is used. In the method, the terminal device determines that a first cell in W cells is a serving cell of the terminal device, where the W cells further include a second cell. The terminal device receives N sets of data transmission mode information from an access network device in the first cell, where the N sets of data transmission mode information include Q1 sets of data transmission mode information respectively corresponding to performing handovers of the terminal device from cells in Q1 cell groups to the first cell through a cell handover of a first type and/or Q2 sets of data transmission mode information respectively corresponding to performing handovers of the terminal device from cells in Q2 cell groups to the second cell through the cell handover of the first type, a cell other than the first cell in the W cells belongs to the Q1 cell group, and a cell other than the second cell in the W cells belongs to the Q2 cell groups, where W, N, Q1, and Q2 are positive integers.

In a possible design, the first cell belongs to a first cell group in the Q2 cell groups, and data transmission mode information corresponding to performing a handover of the terminal device from a cell in the first cell group to the second cell through the cell handover of the first type is third data transmission mode information.

In a possible design, after the terminal device is handed over from the first cell to the second cell through the cell handover of the first type, the method further includes: receiving eighth indication information from the access network device in the second cell, where the eighth indication information indicates the terminal device to perform data transmission with the access network device based on the third data transmission mode information in the N sets of data transmission mode information.

In a possible design, the method further includes: sending ninth indication information and tenth indication information to the access network device in the second cell, where the ninth indication information indicates that the terminal device has been handed over from the first cell to the second cell through the cell handover of the first type, and the tenth indication information indicates the access network device to perform data transmission with the terminal device based on the third data transmission mode information in the N sets of data transmission mode information.

According to a fifth aspect, an embodiment of this application provides a communication method. The method may be applied to an access network device or a module in the access network device. An example in which the method is applied to the access network device is used. In the method, the access network device determines that a first cell in W cells is a serving cell of a terminal device, and sends K sets of data transmission mode information for the terminal device to the terminal device in the first cell, where K is a positive integer. The K sets of data transmission mode information respectively correspond to K handover scenarios in which the terminal device is handed over between the W cells, and the K handover scenarios are determined depending on whether the W cells belong to a same CU and/or a same DU.

In a possible design, the handover of the terminal device between the W cells is a cell handover of a first type.

In a possible design, the W cells further include a second cell, a handover scenario in which the terminal device is handed over from the first cell to the second cell through the cell handover of the first type is a first handover scenario, and the first handover scenario corresponds to third data transmission mode information in the K sets of data transmission mode information.

In a possible design, after the terminal device is handed over from the first cell to the second cell through the cell handover of the first type, the method further includes: sending eighth indication information to the terminal device in the second cell, where the eighth indication information indicates the terminal device to perform data transmission with the access network device based on the third data transmission mode information in the K sets of data transmission mode information.

In a possible design, the method further includes: receiving ninth indication information and tenth indication information from the terminal device in the second cell, where the ninth indication information indicates that the terminal device has been handed over from the first cell to the second cell through the cell handover of the first type, and the tenth indication information indicates the access network device to perform data transmission with the terminal device based on the third data transmission mode information in the K sets of data transmission mode information.

According to a sixth aspect, an embodiment of this application provides a communication method. The method may be applied to a terminal device or a module in the terminal device. An example in which the method is applied to the terminal device is used. In the method, the terminal device determines that a first cell in W cells is a serving cell of the terminal device, and receives K sets of data transmission mode information from an access network device in the first cell, where K is a positive integer. The K sets of data transmission mode information respectively correspond to K handover scenarios in which the terminal device is handed over between the W cells, and the K handover scenarios are determined depending on whether the W cells belong to a same CU and/or a same DU.

In a possible design, the handover of the terminal device between the W cells is a cell handover of a first type.

In a possible design, the W cells further include a second cell, a handover scenario in which the terminal device is handed over from the first cell to the second cell through the cell handover of the first type is a first handover scenario, and the first handover scenario corresponds to third data transmission mode information in the K sets of data transmission mode information.

In a possible design, after the terminal device is handed over from the first cell to the second cell through the cell handover of the first type, the method further includes: receiving eighth indication information from the access network device in the second cell, where the eighth indication information indicates the terminal device to perform data transmission with the access network device based on the third data transmission mode information in the N sets of data transmission mode information.

In a possible design, the method further includes: sending ninth indication information and tenth indication information to the access network device in the second cell, where the ninth indication information indicates that the terminal device has been handed over from the first cell to the second cell through the cell handover of the first type, and the tenth indication information indicates the access network device to perform data transmission with the terminal device based on the third data transmission mode information in the N sets of data transmission mode information.

According to a seventh aspect, the method may be applied to an access network device or a module in the access network device. An example in which the method is applied to the access network device is used. In the method, the access network device determines that a first cell is a serving cell of a terminal device; and sends cell group information of W cells to the terminal device in the first cell, where the W cells include the first cell. The cell group information is for determining a data transmission mode corresponding to performing a handover of the terminal device from one cell in the W cells to another cell in the W cells through a cell handover of a first type, where W is an integer greater than 1.

According to the foregoing method, the access network device may send the cell group information of the W cells to the terminal device in the first cell, so that when the terminal device is subsequently handed over between the W cells, the terminal device may use the corresponding data transmission mode based on a cell group to which a cell in which the terminal device is located before the handover belongs and a cell group to which a cell in which the terminal device is located after the handover belongs, to effectively reduce transmission resource consumption caused by the handover of the terminal device between the W cells, in other words, save transmission resources.

In a possible design, the cell group information includes PDCP-layer group information, the PDCP-layer group information indicates at least one PDCP group, and each of the at least one PDCP group includes at least one of the W cells. When the one cell and the another cell are not in a same PDCP group, the data transmission mode includes performing PDCP data recovery; or when the one cell and the another cell are in a same PDCP group, the data transmission mode includes skipping performing PDCP data recovery.

In a possible design, the cell group information includes RLC-layer group information, the RLC-layer group information indicates at least one RLC group, and each of the at least one RLC group includes at least one of the W cells. When the one cell and the another cell are not in a same RLC group, the data transmission mode includes performing RLC re-establishment; or when the one cell and the another cell are in a same RLC group, the data transmission mode includes skipping performing RLC re-establishment.

In a possible design, the cell group information includes first MAC-layer group information, the first MAC-layer group information indicates at least one first MAC group, and each of the at least one first MAC group includes at least one of the W cells. When the one cell and the another cell are not in a same first MAC group, the data transmission mode includes performing random access; or when the one cell and the another cell are in a same first MAC group, the data transmission mode includes skipping performing random access.

In a possible design, the cell group information includes second MAC-layer group information, the second MAC-layer group information indicates at least one second MAC group, and each of the at least one second MAC group includes at least one of the W cells. When the one cell and the another cell are not in a same second MAC group, the data transmission mode includes performing MAC reset; or when the one cell and the another cell are in a same second MAC group, the data transmission mode includes skipping performing MAC reset.

In a possible design, the method further includes: determining that at least one of the following is met: the terminal device needs to enter an idle mode or an inactive mode, the terminal device needs to be handed over to a cell other than the W cells through a cell handover of a second type, or the cell group information needs to be changed; and releasing the cell group information, and/or indicating the terminal device to release the cell group information.

In a possible design, the determining that a first cell is a serving cell of a terminal device includes: when the terminal device accesses the first cell in idle mode or inactive mode, determining that the first cell is the serving cell of the terminal device; or when the terminal device is handed over to the first cell through the cell handover of the second type, determining that the first cell is the serving cell of the terminal device.

According to an eighth aspect, an embodiment of this application provides a communication method. The method may be applied to a terminal device or a module in the terminal device. An example in which the method is applied to the terminal device is used. In the method, the terminal device receives cell group information of W cells from an access network device in a first cell, where the W cells include the first cell. The terminal device determines, based on the cell group information, a data transmission mode corresponding to performing a handover of the terminal device from one cell in the W cells to another cell in the W cells through a cell handover of a first type, where W is an integer greater than 1.

In a possible design, the cell group information includes PDCP-layer group information, the PDCP-layer group information indicates at least one PDCP group, and each of the at least one PDCP group includes at least one of the W cells. When the one cell and the another cell are not in a same PDCP group, the data transmission mode includes performing PDCP data recovery; or when the one cell and the another cell are in a same PDCP group, the data transmission mode includes skipping performing PDCP data recovery.

In a possible design, the cell group information includes RLC-layer group information, the RLC-layer group information indicates at least one RLC group, and each of the at least one RLC group includes at least one of the W cells. When the one cell and the another cell are not in a same RLC group, the data transmission mode includes performing RLC re-establishment; or when the one cell and the another cell are in a same RLC group, the data transmission mode includes skipping performing RLC re-establishment.

In a possible design, the cell group information includes MAC-layer group information, the MAC-layer group information indicates at least one MAC group, and each of the at least one MAC group includes at least one of the W cells. When the one cell and the another cell are not in a same MAC group, the data transmission mode includes performing random access; or when the one cell and the another cell are in a same MAC group, the data transmission mode includes skipping performing random access.

In a possible design, the cell group information includes MAC-layer group information, the MAC-layer group information indicates at least one MAC group, and each of the at least one MAC group includes at least one of the W cells. When the one cell and the another cell are not in a same MAC group, the data transmission mode includes performing MAC reset; or when the one cell and the another cell are in a same MAC group, the data transmission mode includes skipping performing MAC reset.

In a possible design, the method further includes: determining that at least one of the following is met: the terminal device needs to enter an idle mode or an inactive mode, the terminal device needs to be handed over to a cell other than the W cells through a cell handover of a second type, or the cell group information needs to be changed; and releasing the cell group information, and/or indicating the terminal device to release the cell group information.

In a possible design, the determining that a first cell is a serving cell of a terminal device includes: when the terminal device accesses the first cell in idle mode or inactive mode, determining that the first cell is the serving cell of the terminal device; or when the terminal device is handed over to the first cell through the cell handover of the second type, determining that the first cell is the serving cell of the terminal device.

According to a ninth aspect, this application provides a communication apparatus. The communication apparatus has a function of implementing the first aspect, the third aspect, the fifth aspect, or the seventh aspect. For example, the communication apparatus includes a corresponding module, unit, or means (means) for performing an operation in the first aspect, the third aspect, the fifth aspect, or the seventh aspect. The module, unit, or means may be implemented by software, may be implemented by hardware, or may be implemented by hardware executing corresponding software.

In a possible design, the communication apparatus includes a processing unit and a communication unit. The communication unit may be configured to send and receive a signal, to implement communication between the communication apparatus and another apparatus. The processing unit may be configured to perform some internal operations of the communication apparatus. Functions performed by the processing unit and the communication unit may correspond to the operations in the first aspect, the third aspect, the fifth aspect, or the seventh aspect.

In a possible design, the communication apparatus includes a processor, and the processor may be coupled to a memory. The memory may store a computer program or instructions necessary for implementing the functions in the first aspect, the third aspect, the fifth aspect, or the seventh aspect. The processor may execute the computer program or instructions stored in the memory. When the computer program or instructions is/are executed, the communication apparatus is enabled to implement the method in any one of the possible designs or implementations of the first aspect, the third aspect, the fifth aspect, or the seventh aspect.

In a possible design, the communication apparatus includes a processor and a memory. The memory may store a computer program or instructions necessary for implementing the functions in the first aspect, the third aspect, the fifth aspect, or the seventh aspect. The processor may execute the computer program or instructions stored in the memory. When the computer program or instructions is/are executed, the communication apparatus is enabled to implement the method in any one of the possible designs or implementations of the first aspect, the third aspect, the fifth aspect, or the seventh aspect.

In a possible design, the communication apparatus includes a processor and an interface circuit. The processor is configured to communicate with another apparatus by using the interface circuit, and perform the method in any one of the possible designs or implementations of the first aspect, the third aspect, the fifth aspect, or the seventh aspect.

According to a tenth aspect, this application provides a communication apparatus. The communication apparatus has a function of implementing the second aspect, the fourth aspect, the sixth aspect, or the eighth aspect. For example, the communication apparatus includes a corresponding module, unit, or means for performing an operation in the second aspect, the fourth aspect, the sixth aspect, or the eighth aspect. The function, unit, or means may be implemented by software, may be implemented by hardware, or may be implemented by hardware executing corresponding software.

In a possible design, the communication apparatus includes a processing unit and a communication unit. The communication unit may be configured to send and receive a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the second aspect, the fourth aspect, the sixth aspect, or the eighth aspect.

In a possible design, the communication apparatus includes a processor, and the processor may be coupled to a memory. The memory may store a computer program or instructions necessary for implementing the functions in the second aspect, the fourth aspect, the sixth aspect, or the eighth aspect. The processor may execute the computer program or instructions stored in the memory. When the computer program or instructions is/are executed, the communication apparatus is enabled to implement the method in any one of the possible designs or implementations of the second aspect, the fourth aspect, the sixth aspect, or the eighth aspect.

In a possible design, the communication apparatus includes a processor and a memory. The memory may store a computer program or instructions necessary for implementing the functions in the second aspect, the fourth aspect, the sixth aspect, or the eighth aspect. The processor may execute the computer program or instructions stored in the memory. When the computer program or instructions is/are executed, the communication apparatus is enabled to implement the method in any one of the possible designs or implementations of the second aspect, the fourth aspect, the sixth aspect, or the eighth aspect.

In a possible design, the communication apparatus includes a processor and an interface circuit. The processor is configured to communicate with another apparatus by using the interface circuit, and perform the method in any one of the possible designs or implementations of the second aspect, the fourth aspect, the sixth aspect, or the eighth aspect.

It may be understood that, in the ninth aspect and the tenth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into one chip, or may be separately disposed on different chips. A type of the memory and a manner in which the memory and the processor are disposed are not limited in embodiments of this application.

According to an eleventh aspect, this application provides a communication system. The communication system may include the communication apparatus provided in the seventh aspect and the communication apparatus provided in the eighth aspect.

According to a twelfth aspect, this application provides a computer-readable storage medium, and the computer storage medium stores computer-readable instructions. When a computer reads and executes the computer-readable instructions, the computer is enabled to perform the method in any possible design of the first aspect to the eighth aspect.

According to a thirteenth aspect, this application provides a computer program product. When a computer reads and executes the computer program product, the computer is enabled to perform the method in any possible design of the first aspect to the eighth aspect.

According to a fourteenth aspect, this application provides a chip. The chip includes a processor. The processor is coupled to a memory, and is configured to read and execute a software program stored in the memory, to implement the method in any possible design of the first aspect to the eighth aspect.

These aspects or other aspects of this application are clearer and more comprehensible in descriptions of the following embodiments.

### BRIEF DESCRIPTION OF DRAWINGS

FIG. 1 is a diagram of a communication system to which an embodiment of this application is applicable;
FIG. 2A is a diagram of a CU-DU split architecture according to an embodiment of this application;
FIG. 2B is a diagram of another CU-DU split architecture according to an embodiment of this application;
FIG. 3 is a schematic flowchart corresponding to a communication method according to an embodiment of this application;
FIG. 4 is a diagram of continuous handovers according to an embodiment of this application;
FIG. 5 is a schematic flowchart corresponding to a communication method according to an embodiment of this application;
FIG. 6 is a schematic flowchart corresponding to a communication method according to an embodiment of this application;
FIG. 7 is a schematic flowchart corresponding to a communication method according to an embodiment of this application;
FIG. 8 is a schematic flowchart corresponding to a communication method according to an embodiment of this application;
FIG. 9 is a possible example block diagram of an apparatus according to an embodiment of this application;
FIG. 10 is a diagram of a structure of an access network device according to an embodiment of this application; and
FIG. 11 is a diagram of a structure of a terminal device according to an embodiment of this application.

### DESCRIPTION OF EMBODIMENTS

The following describes technical solutions in embodiments of this application with reference to the accompanying drawings in embodiments of this application.

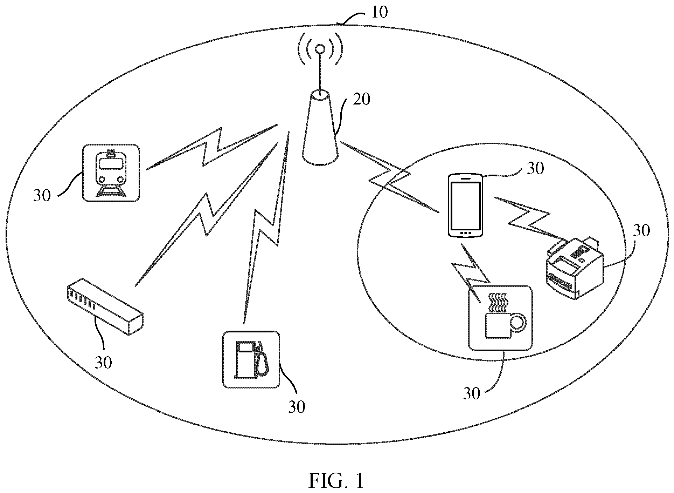

FIG. 1 is a diagram of a communication system to which an embodiment of this application is applicable. As shown in FIG. 1, the communication system 10 includes one or more access network devices 20 and one or more terminal devices 30. An interface between the access network device and the terminal device may be a Uu interface (or referred to as an air interface), and data transmission may be performed between the access network device 20 and the terminal device 30 through an air interface resource. For example, the terminal device may be located within communication coverage of one or more cells of the access network device, and there may be one or more cells that serve the terminal device. When there are a plurality of cells that serve the terminal device, the terminal device may operate by using one or more of transmission technologies such as carrier aggregation (carrier aggregation, CA), dual connectivity (dual connectivity, DC), coordinated multipoint (coordinated multipoint, CoMP) transmission, and multiple transmission and reception point (multiple transmission and reception point, mTRP).

### (1) Terminal device

The terminal device is also referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, some examples of the terminal are: a mobile phone (mobile phone), a tablet computer, a notebook computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

### (2) Access network device

The access network device is a radio access network (radio access network, RAN) node (or device) that connects the terminal to a wireless network, and may also be referred to as a base station. Currently, some examples of the RAN node are: a NodeB (NodeB, NB), a next-generation NodeB (gNB), a transmission reception point (transmission reception point, TRP), an evolved NodeB (evolved NodeB, eNB), a radio network controller (radio network controller, RNC), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like.

### (3) Communication between the terminal device and the access network device

The communication between the terminal device and the access network device complies with a specific protocol layer structure. For example, a control-plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY); and a user-plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may also be collectively referred to as an access stratum. For specific descriptions of the foregoing protocol layers, refer to related technical specifications of the 3rd generation partnership project (3rd generation partnership project, 3GPP).

Using downlink data transmission as an example, downlink data may be correspondingly encapsulated at each layer of the access network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by a PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by an RLC layer entity from the PDCP layer may be referred to as an RLC SDU. After encapsulating the RLC SDU, the RLC layer entity obtains an RLC PDU and sends the RLC PDU to the MAC layer.

From a perspective of the terminal device, after a physical layer of the terminal device receives a transport block from the access network device, the transport block may be sequentially submitted from the physical layer to upper layers, and may be correspondingly decapsulated at each layer. In other words, processing performed at each layer of the terminal device may be an inverse process of processing performed at each layer of the access network device.

### (4) CU-DU split architecture

For example, in some possible network structures, the access network device may include one or more central units (central units, CUs) and one or more distributed units (distributed units, DUs). A plurality of DUs may be centrally controlled by one CU. This architecture may be referred to as the CU-DU split architecture. For example, an interface between the CU and the DU may be referred to as an F 1 interface. A control plane (control plane, CP) interface may be an F1 - C interface, and a user plane (user plane, UP) interface may be an F1-U interface.

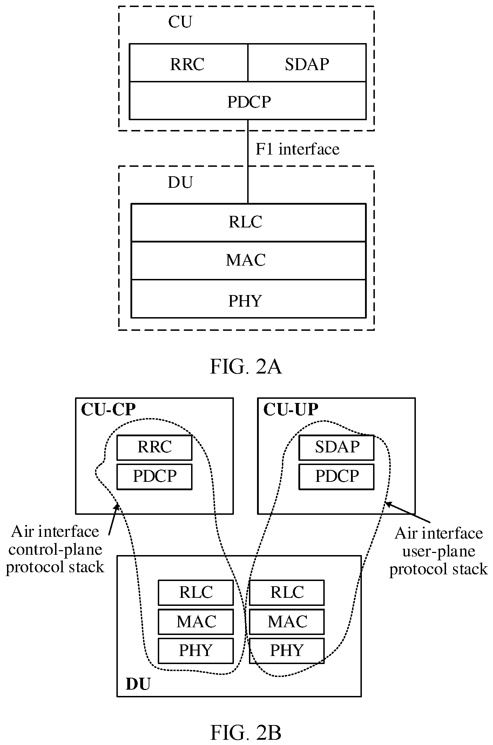

Processing functions of the CU and the DU may be divided based on protocol layers of a wireless network. For example, as shown in FIG. 2A, functions of a PDCP layer and a protocol layer above the PDCP layer are set on the CU, and functions of protocol layers (for example, an RLC layer and a MAC layer) below the PDCP layer are set on the DU. It may be understood that, the division of the processing functions of the CU and the DU based on the protocol layers is merely an example, and the processing functions may alternatively be divided in another manner. For example, functions of protocol layers above the RLC layer are set on the CU, and functions of the RLC layer and protocol layers below the RLC layer are set on the DU. For another example, the CU or the DU may be divided into functions of more protocol layers. For another example, the CU or the DU may be divided into partial processing functions of protocol layers. This is not limited in embodiments of this application.

Further, functions of the CU may be implemented by one entity, or may be implemented by different entities. For example, the functions of the CU may be further divided, to be specific, a control plane and a user plane are split and implemented by different entities that are respectively a control plane CU entity (namely, a CU-CP entity) and a user plane CU entity (namely, a CU-UP entity). The CU-CP entity and the CU-UP entity may be coupled to the DU to jointly complete functions of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to the plurality of coordinating CU-CPs, to improve flexibility of the CU-CP. FIG. 2B is a diagram of distribution of an air interface protocol stack. As shown in FIG. 2B, for both a user plane and a control plane, the air interface protocol stack may be that an RLC layer, a MAC layer, and a PHY layer are on a DU, and a PDCP layer and protocol layers above the PDCP layer are on a CU.

It should be noted that, in the architectures shown in FIG. 2A and FIG. 2B, signaling generated by the CU may be sent to a terminal device through the DU, or signaling generated by the terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed into data at the physical layer and sent to the terminal device, or is converted from received data at the physical layer. In this architecture, the signaling at the RRC layer or the PDCP layer may also be considered as being sent by the DU or by the DU and a radio frequency apparatus.

It may be understood that a quantity of access network devices and a quantity of terminal devices included in the communication system are not limited in embodiments of this application. In addition, the communication system may further include another device or network element, for example, a core network device or a relay device, in addition to the access network device and the terminal device. This is not limited in embodiments of this application.

The communication system shown in FIG. 1 may support various radio access technologies (radio access technologies, RATs). For example, the communication system shown in FIG. 1 may be a 4th generation (4th generation, 4G) communication system (which may also be referred to as a long term evolution (long term evolution, LTE) communication system), a 5th generation (5th generation, 5G) communication system (which may also be referred to as a new radio (new radio, NR) communication system), a wireless fidelity (wireless fidelity, Wi-Fi) system, or a future-oriented evolved system. Communication systems and service scenarios described in embodiments of this application are intended to describe the technical solutions in embodiments of this application more clearly, and do not constitute a limitation on the technical solutions provided in embodiments of this application. A person of ordinary skill in the art may learn that, with evolution of the communication systems and emergence of new service scenarios, the technical solutions provided in embodiments of this application are also applicable to similar technical problems.

The following first describes related technical features in embodiments of this application. It should be noted that these descriptions are intended to make embodiments of this application easier to understand, but should not be considered as a limitation on the protection scope claimed in this application.

### 1. Types of cell handovers

The cell handovers may include a cell handover of a first type and a cell handover of a second type. The cell handover of the first type is a cell handover implemented through a layer 1/layer 2 (a layer 1/layer 2 handover for short), namely, a cell handover that is based on a beam-level measurement result. The cell handover of the second type is a cell handover implemented through a layer 3 (referred to as a layer 3 handover for short), namely, a cell handover that is based on a cell-level measurement result. The layer 1 may be a physical layer, the layer 2 may be any one or more of a MAC layer, an RLC layer, a PDCP layer, or an SDAP layer, and the layer 3 may be an RRC layer. It should be noted that the layer 1/layer 2 handover may also be understood as a layer 1 handover and/or a layer 2 handover. When the layer 1 handover and the layer 2 handover are in an AND relationship, an operation related to a handover process is mainly performed by both the layer 1 and the layer 2. When the layer 1 handover and the layer 2 handover are in an OR relationship, an operation related to a handover process is mainly performed by the layer 1 or the layer 2. Because the layer 1 and the layer 2 are lower than the RRC layer (the layer 3) in a protocol stack, the layer 1/layer 2 handover may also be referred to as a low-layer handover, a bottom-layer handover, or a lower-layer handover. A name of a specific handover technology is not limited in this application.

Further, the layer 1/layer 2 handover may include: (1) a cell handover triggered by an access network device based on the beam-level measurement result, where for example, the access network device makes a handover decision based on the beam-level measurement result reported by a terminal device, and sends a layer 1/layer 2 handover instruction to the terminal device, to instruct the terminal device to perform a cell handover; (2) a cell handover triggered by the terminal device based on the beam-level measurement result, also referred to as layer 1/layer 2 conditional handover (conditional handover, CHO), where for example, the terminal device makes a handover decision based on the beam-level measurement result, and autonomously performs a cell handover when a handover criterion is met, without a need for the access network device to deliver a handover instruction. The handover criterion may be preconfigured by the access network device for the terminal device.

Similarly, the layer 3 handover may include: (1) a cell handover triggered by the access network device based on the cell-level measurement result; (2) a cell handover triggered by the terminal device based on the cell-level measurement result, also referred to as a layer-3 CHO.

The following briefly describes the cell-level measurement result and the beam-level measurement result.

A process in which the terminal device obtains the beam-level measurement result may be as follows: The access network device sends a reference signal in each beam direction of a cell. The reference signal may be a synchronization signal/physical broadcast channel block (synchronization signal/physical broadcast channel block, SSB), a channel state information reference signal (channel state information reference signal, CSI-RS), or a sounding reference signal (sounding reference signal, SRS), or may be another possible reference signal. This is not specifically limited. The terminal device performs measurement based on the reference signal that is on a time-frequency resource and that is indicated by the access network device. For example, the terminal device may obtain, through sampling, a plurality of transitory signal strengths in a time period that are of a beam corresponding to the reference signal, and weight the plurality of obtained signal strengths to obtain a measurement result of the corresponding beam. The cell-level measurement result may be obtained by performing filtering and weighting on the beam-level measurement result of the cell.

### 2. Cell handover scenarios

As described above, the access network device may include one or more CUs and one or more DUs. For example, the access network device includes one CU and a plurality of DUs, where the plurality of DUs may be centrally controlled by the CU, and each of the plurality of DUs may include one or more cells. It may be understood that "the DU includes one or more cells" may also be described as "the DU manages or controls one or more cells", "one or more cells of the DU", or "one or more cells belong to the DU".

When the terminal device is handed over between different cells, there may be a plurality of specific handover scenarios. For example, the handover scenarios may be obtained through classification based on a location relationship between a source cell and a target cell. The location relationship between the source cell and the target cell may be whether the source cell and the target cell belong to a same CU and/or a same DU. Three possible handover scenarios, namely, a scenario 1 to a scenario 3, are described herein.

Scenario 1: The terminal device is handed over from a cell of a DU to another cell of the DU. In other words, the source cell and the target cell of the terminal device belong to the same DU.

Scenario 2: The terminal device is handed over from a cell of a DU 1 controlled by the CU to a cell of a DU 2 controlled by the CU. In this case, the DU 1 may be referred to as a source DU, and the DU 2 may be referred to as a target DU. In other words, the source cell and the target cell of the terminal device belong to different DUs controlled by the same CU.

Scenario 3: The terminal device is handed over from a cell of a DU 1 controlled by a CU 1 to a cell of a DU 3 controlled by a CU 2. In this case, the CU 1 may be referred to as a source CU, and the CU 2 may be referred to as a target CU. In other words, the source cell and the target cell of the terminal device belong to different DUs controlled by different CUs.

### 3. PDCP data recovery

When the terminal device needs to be handed over between DUs due to movement, for example, handed over from a source DU to a target DU, for uplink data, if the uplink data sent by the terminal device to the source DU has not been successfully sent, a PDCP layer entity of the terminal device needs to trigger retransmission, to be specific, the uplink data is retransmitted through an RLC layer entity corresponding to the target DU, so that after the target DU successfully receives the uplink data, the target DU may submit the data to a PDCP layer entity of a CU, to ensure lossless transmission of the uplink data. Similarly, for downlink data, if the downlink data sent by the CU to the terminal device through the source DU has not been successfully sent, the downlink data may be retransmitted through the target DU, to ensure lossless transmission of the downlink data.

It may be understood that, in some handover scenarios, the PDCP data recovery may include RLC re-establishment, in other words, performing PDCP data recovery means also performing RLC re-establishment. For example, the RLC re-establishment may be discarding an RLC SDU, a segment of the SDU, an RLC PDU, or the like, and stopping and resetting all timers at the RLC layer. RLC maintenance may mean that an RLC function continues to run.

In some embodiments, the "PDCP data recovery" may be replaced with another possible description, for example, replaced with the "RLC re-establishment" or "PDCP data retransmission".

### 4. PDCP re-establishment

When the terminal device needs to be handed over between CUs due to movement, for example, handed over from a source CU to a target CU, because an anchor location of a PDCP layer changes, a PDCP key update needs to be performed. For uplink data, if the uplink data sent by the terminal device to the source CU has not been successfully sent, a PDCP layer of the terminal device triggers re-establishment, to be specific, after the uplink data is processed by using a key of the target CU, the uplink data is retransmitted through an RLC layer entity corresponding to a target DU associated with the target CU, so that after the target DU successfully receives the uplink data, the target DU may submit the data to a PDCP layer entity of the target CU, to ensure lossless transmission of the uplink data. Similarly, for downlink data, if the downlink data sent by the source CU to the terminal device has not been successfully sent, after the downlink data is processed by the target CU by using a key of a PDCP layer of the target CU, the downlink data may be retransmitted through the target DU associated with the target CU, to ensure lossless transmission of the data.

It may be understood that the "PDCP re-establishment" may be replaced with another possible description, for example, replaced with the "PDCP key update". For example, the PDCP re-establishment may be re-establishing a PDCP layer entity by using a new configuration, and includes discarding a stored PDCP PDU, a stored PDCP SDU, or the like by using an indicated key and encryption algorithm. PDCP discard may be discarding the stored PDCP PDU, the stored PDCP SDU, or the like. PDCP maintenance may mean that a PDCP function continues to run.

### 5. Uplink synchronization information

The uplink synchronization information may include an uplink timing advance (timing advance, TA). In an orthogonal multiple access system, to ensure orthogonality of uplink transmission and avoid intra-cell interference, an access network device requires that signals of different terminal devices that are from a same subframe but on different frequency domain resources arrive at the access network device at basically aligned time points. To ensure time synchronization on a receive side (namely, an access network device side), an uplink TA mechanism may be used, so that the access network device can control, by controlling an uplink TA of each terminal device, the time points at which the uplink signals from different terminal devices arrive at the access network device. From a perspective of a terminal device side, the uplink TA is essentially a negative offset between a start time point at which a downlink subframe is received and a time point at which an uplink subframe is transmitted. Due to a large transmission delay, a terminal device that is far away from the access network device needs to send uplink data earlier than a terminal device that is close to the access network device.

For a cell handover, in a possible implementation, a terminal device may send a random access preamble or an uplink reference signal to obtain uplink synchronization information (for example, an uplink TA) for a target cell. The uplink reference signal may be, for example, a sounding reference signal (sounding reference signal, SRS).

For example, when or after the terminal device is handed over to the target cell, the terminal device may send the random access preamble or the uplink reference signal to the access network device in the target cell, so that the access network device may obtain the uplink TA through measurement based on the random access preamble or the uplink reference signal, and send a timing advance command to the terminal device by using a random access response message. Correspondingly, the terminal device may obtain the uplink TA based on the timing advance command.

For another example, before performing a cell handover, the terminal device may send the random access preamble or the uplink reference signal to the access network device in one or more candidate cells, to obtain and store an uplink TA for the one or more candidate cells. For example, the one or more candidate cells include a cell 1, and the terminal device may send the random access preamble or the uplink reference signal to the access network device in the cell 1 based on a specified periodicity, to obtain and store an uplink TA for the cell 1. The uplink TA for the cell 1 stored by the terminal device may be a latest uplink TA for the cell 1. Further, when or after the terminal device is handed over to the cell 1 (in this case, the cell 1 is the target cell), the terminal device may use the stored uplink TA for the cell 1, and does not need to send the random access preamble or the uplink reference signal to the access network device to obtain the uplink TA for the cell 1.

In another possible implementation, the terminal device may alternatively not send a random access preamble or an uplink reference signal to obtain uplink synchronization information for a target cell. For example, in a manner 1, the terminal device may use uplink synchronization information for a source cell as the uplink synchronization information for the target cell. In a manner 2, the terminal device may receive a downlink reference signal of the target cell, to estimate a difference between an uplink TA for the target cell and an uplink TA for a source cell based on a strength difference between a downlink reference signal received by the terminal device from the source cell and the downlink reference signal received by the terminal device from the target cell or a time difference between the downlink reference signal received by the terminal device from the source cell and the downlink reference signal received by the terminal device from the target cell, and therefore derive the uplink TA for the target cell from the uplink TA for the source cell. It may be understood that, in some possible solutions, time synchronization is required between the source cell and the target cell in the manner 2, to be specific, the source cell and the target cell send the downlink reference signals at a same time point.

It may be understood that random access mainly involves a MAC layer. From a perspective of the MAC layer, MAC-layer behaviors may include reset (in other words, re-establishment), partial reset, and maintenance. For example, the MAC reset may be stopping all timers, initializing MAC-layer state variables, or clearing a HARQ cache. The MAC maintenance (no reset) may mean that a MAC function continues to run. The MAC partial reset may be keeping a part of timers continuing to run, and/or reserving a part of MAC state variables.

In an example, there is an association relationship between the random access and the MAC reset. Specifically, when the MAC reset is performed, the terminal device needs to obtain the uplink synchronization information for the target cell through a random access process. When the MAC maintenance is performed, the terminal device does not need to obtain the uplink synchronization information for the target cell through a random access process. For example, the terminal device maintains the uplink synchronization information obtained in the source cell. When the MAC partial reset is performed, if content related to the uplink synchronization information for the target cell is reset, the terminal device needs to obtain the uplink synchronization information for the target cell through a random access process; or if content related to the uplink synchronization information for the target cell is not reset, the terminal device does not need to obtain the uplink synchronization information for the target cell through a random access process. In this case, the foregoing "sending the random access preamble to obtain the uplink synchronization information for the target cell" may be replaced with the "MAC reset". The "uplink synchronization information for the target cell" may be replaced with another possible description, for example, replaced with the "uplink TA for the target cell".

In another example, there is no association relationship between the random access and the MAC reset (in other words, the random access and the MAC reset are decoupled). In this case, when the MAC reset is performed, the random access may or may not be performed. Similarly, when the MAC maintenance is performed, the random access may or may not be performed. Similarly, when the MAC partial reset is performed, the random access may or may not be performed.

### 6. Data transmission mode information

The data transmission mode information indicates a data transmission mode between a terminal device and a target cell applied after the terminal device is handed over to the target cell. The "data" in the "data transmission mode" may be data in a broad sense, for example, including service data, and may further include other possible information. There may be a plurality of data transmission modes. The following describes the data transmission mode with reference to an example 1 and an example 2.

### (1) Example 1

In the example 1, the data transmission mode may include at least one of the following: whether to perform PDCP re-establishment, whether to perform PDCP data recovery, or whether to send a random access preamble or an uplink reference signal to obtain uplink synchronization information for the target cell. Six possible data transmission modes are described herein.

A data transmission mode 1 includes: skipping performing PDCP re-establishment, skipping performing PDCP data recovery, and skipping sending the random access preamble or the uplink reference signal to obtain the uplink synchronization information for the target cell.

A data transmission mode 2 includes: skipping performing PDCP re-establishment, skipping performing PDCP data recovery, and sending the random access preamble or the uplink reference signal to obtain the uplink synchronization information for the target cell.

A data transmission mode 3 includes: performing PDCP data recovery, and sending the random access preamble or the uplink reference signal to obtain the uplink synchronization information for the target cell.

A data transmission mode 4 includes: performing PDCP re-establishment, and sending the random access preamble or the uplink reference signal to obtain the uplink synchronization information for the target cell.

A data transmission mode 5 includes: performing PDCP data recovery, and skipping sending the random access preamble or the uplink reference signal to obtain the uplink synchronization information for the target cell.

A data transmission mode 6 includes: performing PDCP re-establishment, and skipping sending the random access preamble or the uplink reference signal to obtain the uplink synchronization information for the target cell.

It may be understood that a same data transmission mode may include one of "performing PDCP re-establishment" and "performing PDCP data recovery". In other words, only one of "PDCP re-establishment" and "PDCP data recovery" is simultaneously performed at most. When a specific data transmission mode includes "performing PDCP re-establishment", it means "skipping performing PDCP data recovery". When a specific data transmission mode includes "performing PDCP data recovery", it means "skipping performing PDCP re-establishment". When a specific data transmission mode includes "skipping performing PDCP data recovery" and "skipping performing PDCP re-establishment", the data transmission mode may be understood as performing "PDCP maintenance". An implementation of "including skipping performing PDCP data recovery" is that the data transmission mode information does not include an indication of the PDCP data recovery. An implementation of "including skipping performing PDCP re-establishment" is that the data transmission mode information does not include an indication of the PDCP re-establishment. For descriptions of behaviors of other protocol layers in the following, refer to the foregoing implementations. In other words, an implementation of skipping performing an X behavior is that the data transmission mode information does not include an indication of performing the X behavior, or the data transmission mode information does not indicate to perform the X behavior. The "sending the random access preamble or the uplink reference signal to obtain the uplink synchronization information for the target cell" included in the foregoing data transmission mode may mean: When the terminal device is handed over to the target cell, the terminal device sends the random access preamble or the uplink reference signal to the access network device to obtain the uplink synchronization information for the target cell. Alternatively, before the terminal device is handed over to the target cell, the terminal device sends the random access preamble or the uplink reference signal to the access network device to obtain the uplink synchronization information for the target cell. For details, refer to the foregoing descriptions. The "skipping sending the random access preamble or the uplink reference signal to obtain the uplink synchronization information for the target cell " included in the foregoing data transmission mode may be replaced with "using uplink synchronization information for a source cell as the uplink synchronization information for the target cell", "using uplink synchronization information for the target cell calculated by the terminal device", or a "random access-free handover".

In addition, there may be a plurality of implementations in which the data transmission mode information indicates the data transmission mode. For example, the data transmission mode information may include at least one of the following: first information, second information, or third information. The first information indicates whether to perform PDCP re-establishment, the second information indicates whether to perform PDCP data recovery, and the third information indicates whether to send the random access preamble or the uplink reference signal to obtain the uplink synchronization information for the target cell. For example, the data transmission mode information may alternatively not include the third information. In this case, if configuration information for the target cell sent by the access network device to the terminal device includes configuration information for a random access resource or the uplink reference signal, the terminal device is implicitly indicated to send the random access preamble or the uplink reference signal to obtain the uplink synchronization information for the target cell; or if configuration information for the target cell sent by the access network device to the terminal device does not include configuration information for a random access resource or the uplink reference signal, the terminal device is implicitly indicated not to send the random access preamble or the uplink reference signal to obtain the uplink synchronization information for the target cell.

### (2) Example 2

In the example 2, the data transmission mode may include at least one of the following: a PDCP-layer behavior, an RLC-layer behavior, or a MAC-layer behavior. Specifically, different data transmission modes may be designed based on behaviors of different protocol layers. (1) PDCP-layer behaviors for a data radio bearer (data radio bearer, DRB) include: re-establishment, data recovery, and maintenance. PDCP-layer behaviors for a signaling radio bearer (signaling radio bearer, SRB) include: re-establishment, maintenance, and discard. (2) RLC-layer behaviors include: re-establishment and maintenance (no re-establishment). (3) MAC-layer behaviors include: reset, partial reset, and maintenance (no reset). In a possible implementation, the PDCP-layer behavior, the RLC-layer behavior, and the MAC-layer behavior may be combined, to obtain a plurality of data transmission modes. For example, the data transmission modes obtained through combination may include a data transmission mode A, a data transmission mode B, and the like, and examples are not enumerated herein.

Data transmission mode A: PDCP re-establishment, RLC re-establishment, and MAC reset (corresponding to the foregoing data transmission mode 4).

Data transmission mode B: PDCP data recovery, RLC re-establishment, and MAC reset (corresponding to the foregoing data transmission mode 3).

It may be understood that, in the descriptions of the data transmission mode, the descriptions of the MAC-layer behavior and the behavior descriptions of whether to perform the random access process may be replaced with each other. For example, the "MAC reset" may be replaced with "performing random access", and the "MAC maintenance" may be replaced with "skipping performing random access". Alternatively, the descriptions of the MAC-layer behaviors and the behavior descriptions of whether to perform the random access process may coexist. For example, when the descriptions both exist, the "MAC reset" in the data transmission mode may be replaced with "MAC reset is performed, and random access needs to be initiated".

### 7. Relationship between a handover scenario and a data transmission mode

For example, there may be a correspondence between the handover scenario and the data transmission mode.

For example, the scenario 1 may correspond to the data transmission mode 1. In other words, when the source cell and the target cell of the terminal device belong to the same DU, after the terminal device is handed over to the target cell, the PDCP re-establishment may not be performed, the PDCP data recovery may not be performed, and the random access preamble or the uplink reference signal may not be sent to obtain the uplink synchronization information for the target cell. A reason is as follows: Because the source cell and the target cell belong to the same DU, for a service that is being used by the terminal device, a PDCP layer entity and an RLC layer entity that correspond to the service do not need to be re-established. After the terminal device is handed over to the target cell, the terminal device may continue to transmit data of the service through the previous PDCP layer entity and RLC layer entity. In addition, because the source cell and the target cell belong to the same DU, to be specific, the source cell and the target cell are deployed in a same physical location, uplink synchronization information for the source cell is the same as the uplink synchronization information for the target cell. Therefore, the terminal device may use the uplink synchronization information for the source cell as the uplink synchronization information for the target cell.

For another example, the scenario 2 may correspond to the data transmission mode 3. In other words, when the source cell and the target cell of the terminal device belong to different DUs controlled by the same CU, after the terminal device is handed over to the target cell, the PDCP data recovery may be performed, and the random access preamble or the uplink reference signal may be sent to obtain the uplink synchronization information for the target cell. A reason is as follows: Because the source cell and the target cell belong to different DUs controlled by the same CU, for a service that is being used by the terminal device, a PDCP layer entity corresponding to the service does not need to be re-established, and an RLC layer entity corresponding to the service needs to be re-established. After the terminal device is handed over to the target cell, the terminal device may transmit data of the service through the previous PDCP layer entity and a re-established RLC layer entity. In addition, because the source cell and the target cell belong to different DUs, and the source cell and the target cell may be deployed in different physical locations, uplink synchronization information for the source cell may be different from the uplink synchronization information for the target cell. Therefore, the terminal device needs to send the random access preamble or the uplink reference signal to obtain the uplink synchronization information for the target cell.

For another example, the scenario 3 may correspond to the data transmission mode 4. In other words, when the source cell and the target cell of the terminal device belong to different DUs controlled by different CUs, after the terminal device is handed over to the target cell, the PDCP re-establishment may be performed, and the random access preamble or the uplink reference signal may be sent to obtain the uplink synchronization information for the target cell. A reason is as follows: Because the source cell and the target cell belong to different DUs controlled by different CUs, for a service that is being used by the terminal device, a PDCP layer entity corresponding to the service needs to be re-established. After the terminal device is handed over to the target cell, the terminal device may transmit data of the service through a re-established PDCP layer entity. In addition, because the source cell and the target cell belong to different DUs, and the source cell and the target cell may be deployed in different physical locations, the terminal device needs to send the random access preamble or the uplink reference signal to obtain the uplink synchronization information for the target cell.

It may be understood that the foregoing correspondence between the handover scenario and the data transmission mode is a possible example. In embodiments of this application, the following uses the example for description, but another possible correspondence is not excluded. For example, the scenario 1 may correspond the data transmission mode 2, or the scenario 2 may correspond the data transmission mode 1.

Based on the foregoing descriptions of the related technical features, a handover of the terminal device between different cells is studied in embodiments of this application.

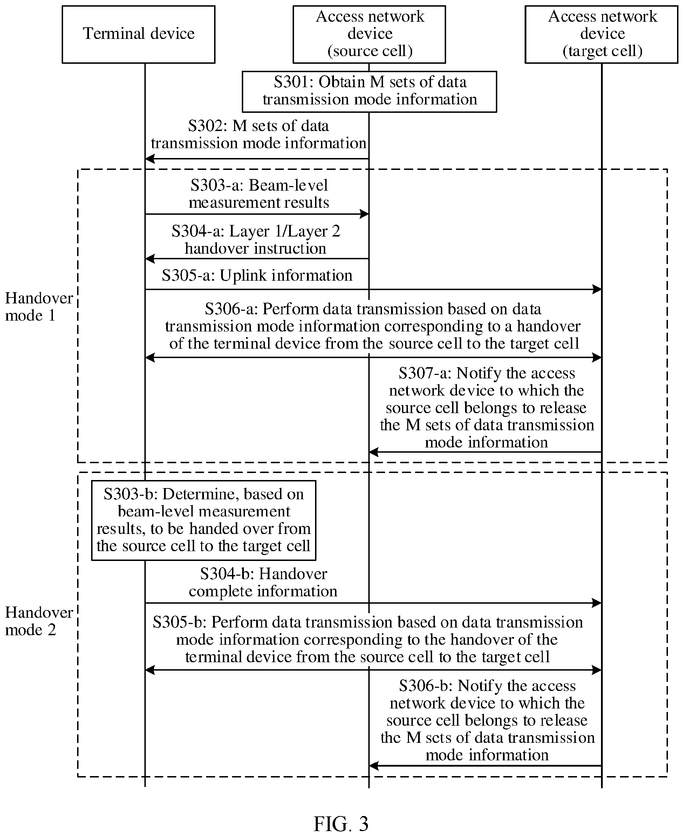

With reference to FIG. 3, the following uses the layer 1/layer 2 handover as an example to describe a communication method provided in embodiments of this application.

FIG. 3 is a schematic flowchart corresponding to a communication method according to an embodiment of this application. As shown in FIG. 3, the method includes the following steps.

S301: An access network device to which a source cell belongs obtains M sets of data transmission mode information for a terminal device, where the M sets of data transmission mode information include data transmission mode information respectively corresponding to handovers of the terminal device from the source cell to M candidate cells, where M is a positive integer.

For example, the access network device to which the source cell belongs may obtain configuration information for the M candidate cells of the terminal device. Using one of the candidate cells as an example, configuration information for the candidate cell includes data transmission mode information corresponding to a handover of the terminal device from the source cell to the candidate cell. Optionally, the configuration information for the candidate cell may further include related information of the candidate cell and configuration information for the terminal device in the candidate cell.

The related information of the candidate cell may include at least one of the following: reference signal configuration information (for example, SSB configuration information, CSI-RS configuration information, or SRS configuration information) for the candidate cell; beam measurement configuration information for the candidate cell, for example, transmission configuration indicator (transmission configuration indicator, TCI) state configuration information; or a physical cell identity (physical cell identity, PCI) of the candidate cell.

The configuration information for the terminal device in the candidate cell may include at least one of the following: physical-layer channel configuration information for the terminal device in the candidate cell or a cell-radio network temporary identifier (cell-radio network temporary identifier, C-RNTI) allocated by the candidate cell to the terminal device. A physical-layer channel includes, for example, a physical downlink control channel (physical downlink control channel, PDCCH), a physical downlink shared channel (physical downlink shared channel, PDSCH), a physical uplink control channel (physical uplink control channel, PUCCH), or a physical uplink shared channel (physical uplink shared channel, PUSCH).

The data transmission mode information corresponding to the handover of the terminal device from the source cell to the candidate cell may be determined based on a handover scenario in which the terminal device is handed over from the source cell to the candidate cell. For example, if the handover scenario in which the terminal device is handed over from the source cell to the candidate cell is the foregoing scenario 1, the data transmission mode information corresponding to the handover of the terminal device from the source cell to the candidate cell may indicate the data transmission mode 1. For another example, if the handover scenario in which the terminal device is handed over from the source cell to the candidate cell is the foregoing scenario 2, the data transmission mode information corresponding to the handover of the terminal device from the source cell to the candidate cell may indicate the data transmission mode 3.

It may be understood that the source cell and the candidate cell may belong to the same access network device, or may belong to different access network devices. When the source cell and the candidate cell belong to different access network devices, the access network device to which the source cell belongs may obtain the configuration information for the candidate cell through an Xn interface from the access network device to which the candidate cell belongs.

S302: The access network device to which the source cell belongs sends the M sets of data transmission mode information to the terminal device. Correspondingly, the terminal device receives the M sets of data transmission mode information.

For example, the access network device to which the source cell belongs may send an RRC message to the terminal device, where the RRC message includes the configuration information for the M candidate cells, and the configuration information for the M candidate cells includes the M sets of data transmission mode information.

Optionally, the method may further include S303-a to S307-a (namely, a handover mode 1), or include S303-b to S306-b (namely, a handover mode 2).

S303-a: The terminal device performs beam-level measurement on the source cell and the candidate cell, to obtain beam-level measurement results, and reports the beam-level measurement results to the access network device to which the source cell belongs.

S304-a: The access network device to which the source cell belongs sends a layer 1/layer 2 handover instruction to the terminal device based on the beam-level measurement results, where the handover instruction instructs the terminal device to be handed over from the source cell to the target cell. Correspondingly, the terminal device receives the handover instruction, and is handed over from the source cell to the target cell based on the handover instruction.

Herein, the target cell may be selected from the M candidate cells based on the beam-level measurement results by the access network device to which the source cell belongs. The layer 1 handover instruction may be downlink control information (downlink control information, DCI) carried on a PDCCH, and the layer 2 handover instruction may be a MAC control element (control element, CE).

The handover instruction may include identification information of the target cell and target beam information to be used by the terminal device in the target cell. The identification information of the target cell may be, for example, a PCI of the target cell. The target beam information may include, for example, identification information of a TCI state, in other words, a target beam may be indicated by the TCI state.

S305-a: The terminal device sends uplink information (or an acknowledgment instruction for the handover instruction) to an access network device to which the target cell belongs, where the uplink information notifies the access network device that the terminal device has been handed over from the source cell to the target cell.

Herein, the uplink information may be a layer 1/layer 2 acknowledgment (acknowledgment, ACK), or may be uplink data or signaling, for example, a scheduling request (scheduling request, SR), sent by the terminal device to the target cell.

For example, in a possible manner, the uplink information may include identification information of the source cell, for example, a PCI of the source cell. Optionally, the uplink information may further include identification information, for example, a C-RNTI, of the terminal device. The C-RNTI may be configured by the target cell for the terminal device. In this way, after receiving the uplink information, the access network device to which the target cell belongs may identify the terminal device based on the identification information of the terminal device, and identify the source cell of the terminal device based on the PCI of the source cell. In this manner, the terminal device and the source cell are explicitly indicated. In another possible manner, after selecting the target cell based on the beam-level measurement results, the access network device to which the source cell belongs may communicate with the access network device to which the target cell belongs, for example, confirm with the access network device to which the target cell belongs whether the terminal device is allowed to be handed over to the target cell. Correspondingly, if the terminal device is allowed to be handed over to the target cell, the access network device to which the target cell belongs may allocate a first physical resource to the terminal device, and notify the first physical resource to the terminal device through the source cell. Further, the terminal device may send, on the first physical resource, the uplink information to the access network device to which the target cell belongs. In this way, after receiving the uplink information on the first physical resource, the access network device to which the target cell belongs may identify the terminal device and the source cell of the terminal device based on the first physical resource. In this manner, the terminal device and the source cell are implicitly indicated.

For example, after the terminal device is handed over from the source cell to the target cell, the terminal device may release the M sets of data transmission mode information. Optionally, the terminal device may further release other information, for example, the configuration information for the terminal device in the M candidate cells.

In a possible implementation, the terminal device may further send an acknowledgment instruction for the handover command to the access network device to which the source cell belongs, to indicate that the handover command is successfully received.

S306-a: The terminal device and the access network device to which the target cell belongs perform data transmission based on data transmission mode information corresponding to the handover of the terminal device from the source cell to the target cell.

S307-a: The access network device to which the target cell belongs sends a notification message to the access network device to which the source cell belongs, where the notification message notifies the access network device to which the source cell belongs to release the M sets of data transmission mode information for the terminal device. Correspondingly, the access network device to which the source cell belongs may release the M sets of data transmission mode information for the terminal device based on the notification message. Herein, if the access network device to which the target cell belongs and the access network device to which the source cell belongs are the same access network device, the notification message does not need to be transmitted.

Optionally, the access network device to which the source cell belongs may further release other related information for the terminal device, for example, the configuration information for the terminal device in the M candidate cells.

In this embodiment of this application, that the terminal device or the access network device to which the source cell belongs "releases the M sets of data transmission mode information for the terminal device" may be understood as: The terminal device or the access network device to which the source cell belongs "deletes the stored M sets of data transmission mode information for the terminal device".

S303-b: The terminal device performs beam-level measurement on the source cell and the candidate cell to obtain beam-level measurement results, and determines, based on the beam-level measurement results, to be handed over from the source cell to a target cell.

Herein, the terminal device may trigger a cell handover, namely, a layer 1/layer 2 CHO, based on the beam-level measurement results. In this case, in S302, the access network device may further send a handover criterion for the layer 1/layer 2 CHO to the terminal device, so that the terminal device may trigger the cell handover based on the beam-level measurement results and the handover criterion. For example, the handover criterion for the layer 1/layer 2 CHO may be that when channel quality of the candidate cell is better than channel quality of the source cell, the handover to the candidate cell may be performed.

S304-b: The terminal device sends handover complete information to an access network device to which the target cell belongs, where the handover complete information notifies the access network device that the terminal device has been handed over from the source cell to the target cell.

In a possible implementation, the handover complete information may be a random access preamble or an uplink reference signal sent by the terminal device to the target cell. In this case, the access network device to which the target cell belongs may learn of an identifier of the source cell of the terminal device by using a message 3 in a random access process or another possible message.

In another possible implementation, the handover complete information may alternatively be a layer 1/layer 2 instruction. In this case, the handover complete information may include an identifier of the source cell. Alternatively, the access network device to which the target cell belongs may learn of an identifier of the source cell of the terminal device by using a message 3 in a random access process or another possible message.

For example, after the terminal device is handed over from the source cell to the target cell, the terminal device may release the M sets of data transmission mode information.

S305-b: The terminal device and the access network device to which the target cell belongs perform data transmission based on data transmission mode information corresponding to the handover of the terminal device from the source cell to the target cell.

S306-b: The access network device to which the target cell belongs sends a notification message to the access network device to which the source cell belongs, where the notification message notifies the access network device to which the source cell belongs to release the M sets of data transmission mode information for the terminal device. Correspondingly, the access network device to which the source cell belongs may release the M sets of data transmission mode information for the terminal device based on the notification message.

It may be understood that S303-a to S307-a are a cell handover triggered by the access network device based on the beam-level measurement results, and S303-b to S306-b are the cell handover triggered by the terminal device based on the beam-level measurement results. Similar steps in S303-a to S307-a and S303-b to S306-b may be mutually referenced.

According to the method shown in FIG. 3, the access network device to which the source cell belongs may send, to the terminal device, the M sets of data transmission mode information respectively corresponding to the handovers of the terminal device from the source cell to the M candidate cells, so that after the terminal device is handed over to the target cell (namely, a specific candidate cell), the terminal device and the access network device to which the target cell belongs may perform data transmission based on the data transmission mode information corresponding to the handover of the terminal device from the source cell to the target cell.

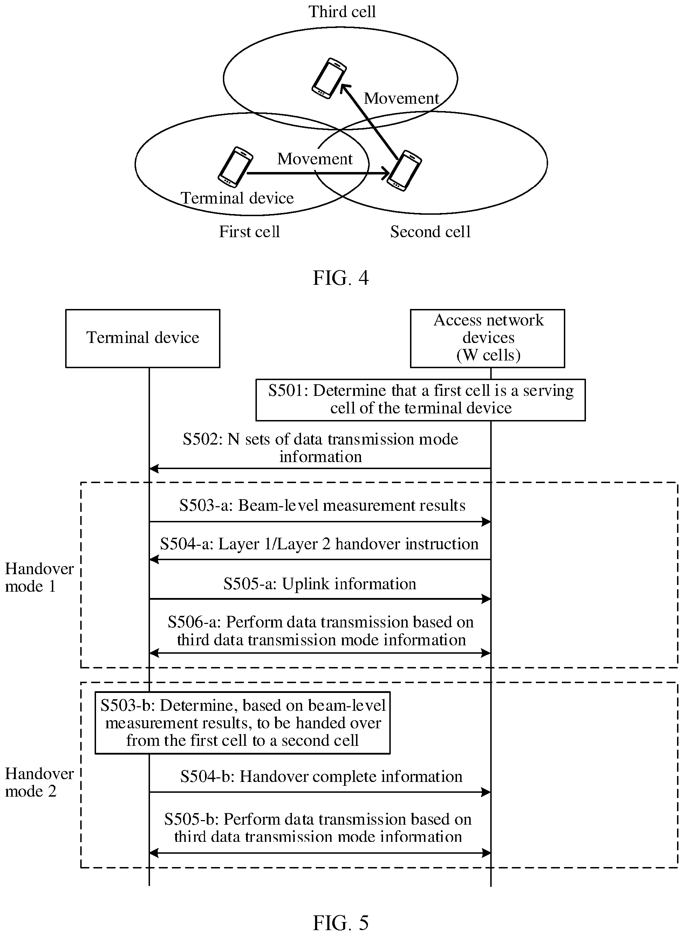

However, considering that the terminal device may continuously perform a plurality of layer 1/layer 2 handovers between a plurality of cells, as shown in FIG. 4, after the terminal device is handed over from a first cell to a second cell, the terminal device may be handed over from the second cell to a third cell. In this case, according to the method shown in FIG. 3, during each handover of the terminal device, the access network device to which the source cell belongs needs to send, to the terminal device, the data transmission mode information corresponding to the handover of the terminal device from the source cell to the candidate cell (for example, in a case in which the terminal device is handed over from the first cell to the second cell, the first cell is used as the source cell, and an access network device to which the first cell belongs needs to send, to the terminal device, data transmission mode information corresponding to the handover from the first cell to the candidate cell; in a case in which the terminal device is handed over from the second cell to the third cell, the second cell is used as the source cell, and an access network device to which the second cell belongs needs to send, to the terminal device, data transmission mode information corresponding to the handover from the second cell to the candidate cell). Consequently, transmission resource overheads are high.

An embodiment of this application provides another communication method. The communication method may include: After determining that a first cell is a serving cell of a terminal device, an access network device may send N sets of data transmission mode information to the terminal device in the first cell, where N is a positive integer. The N sets of data transmission mode information include first data transmission mode information corresponding to a handover of the terminal device from a second cell to the first cell and/or second data transmission mode information corresponding to a handover of the terminal device from the second cell to a third cell. In other words, the access network device may send, to the terminal device in a source cell, a plurality of sets of data transmission mode information corresponding to handovers of the terminal device between different cells (this is different from FIG. 3 in which the access network device sends, to the terminal device in the source cell, the data transmission mode information corresponding to the handover from the current source cell to the candidate cell, namely, data transmission mode information corresponding to a handover of the terminal device from the first cell to the second cell or the third cell), so that the terminal device can directly use the corresponding data transmission mode information when performing continuous handovers between different cells, to effectively save transmission resources.

The following describes the method in detail with reference to Embodiment 1 to Embodiment 3. Data transmission modes in Embodiment 1 to Embodiment 3 may be the data transmission mode described in the example 1 above.

### Embodiment 1

FIG. 5 is a schematic flowchart corresponding to a communication method according to Embodiment 1 of this application. As shown in FIG. 5, the method includes the following steps.

S501: An access network device determines that a first cell is a serving cell of a terminal device.

Herein, there may be a plurality of cases in which the access network device determines that the first cell is the serving cell of the terminal device. For example, in a case 1, when the terminal device accesses the first cell in idle mode or inactive (inactive) mode, the access network device may determine that the first cell is the serving cell of the terminal device. For another example, in a case 2, when the terminal device is handed over from another cell to the first cell through a layer 3 handover, the access network device may determine that the first cell is the serving cell of the terminal device.

It may be understood that S501 is described from a perspective of the access network device. From a perspective of the terminal device, in the foregoing case 1 or case 2, the terminal device may also determine that the first cell is the serving cell of the terminal device.

For example, the access network device may include one CU and one or more DUs, for example, a DU 1 and a DU 2.

S502: The access network device sends N sets of data transmission mode information to the terminal device in the first cell. Correspondingly, the terminal device may receive the N sets of data transmission mode information. Further, the access network device and the terminal device may store the N sets of data transmission mode information.

For example, before S502, the access network device may determine W cells for the terminal device, and then determine the N sets of data transmission mode information based on the W cells. The W cells include a current source cell (namely, the first cell) and one or more candidate cells of the terminal device. The terminal device may perform a layer 1/layer 2 handover between the W cells. In other words, the W cells include a cell for the terminal device to perform the layer 1/layer 2 handover. For example, all the W cells may be cells managed by the access network device, in other words, the W cells belong to the access network device. For example, the W cells may belong to the one or more DUs of the access network device. W is an integer greater than 1, and a specific quantity of the W cells is not limited in embodiments of this application.

The access network device may determine the W cells in a plurality of implementations. In a possible implementation, the access network device may configure neighboring cell measurement information for the terminal device in the first cell. The neighboring cell measurement information may include a measurement configuration and a reporting configuration for at least one neighboring cell of the first cell. In this way, the terminal device may measure the neighboring cell of the first cell based on the neighboring cell measurement information, and report a measurement result (for example, a cell-level measurement result or a beam-level measurement result). Correspondingly, the access network device may determine the W cells based on the measurement result reported by the terminal device. For example, if the measurement result is the cell-level measurement result, the W cells may include the first cell and one or more neighboring cells whose cell-level measurement results are greater than or equal to a first threshold. For another example, if the measurement result is the beam-level measurement result, the W cells may include the first cell and one or more neighboring cells, where any one of the one or more neighboring cells includes a beam whose measurement result is greater than or equal to a second threshold. The first threshold or the second threshold may be set based on an actual requirement. This is not specifically limited. In another possible implementation, the access network device may determine the W cells based on a radio resource management algorithm. For example, the access network device may obtain historical movement track information of the terminal device, determine, based on the historical movement track information, a list of cells from/to which the terminal device is frequently handed over, and determine the W cells based on the list of cells from/to which the terminal device is frequently handed over.

With reference to an implementation 1 and an implementation 2, the following uses an example in which the W cells include the first cell, a second cell, and a third cell (where the first cell and the second cell belong to a DU 1 controlled by the CU, and the third cell belongs to a DU 2 controlled by the CU) to describe a specific implementation in which the access network device sends the N sets of data transmission mode information to the terminal device.

### (1) Implementation 1

The N sets of data transmission mode information for the terminal device include W-1 sets of data transmission mode information respectively corresponding to performing handovers of the terminal device from W-1 cells other than an i^{th} cell in the W cells to the i^{th} cell through the layer 1/layer 2 handover, where the i^{th} cell may be any one of the W cells.

For example, the W cells include the first cell, the second cell, and the third cell, the first cell and the second cell belong to the DU 1 controlled by the CU, and the third cell belongs to the DU 2 controlled by the CU. In this case, the N sets of data transmission mode information for the terminal device may include at least one of the following (1), (2), and (3):
(1) P1 sets of data transmission mode information respectively corresponding to performing handovers of the terminal device from P1 cells (namely, the second cell and the third cell) other than the first cell in the W cells to the first cell through the layer 1/layer 2 handover: For example, the P1 sets of data transmission mode information include data transmission mode information a1 corresponding to performing a handover of the terminal device from the second cell to the first cell through the layer 1/layer 2 handover (namely, the scenario 1) and data transmission mode information a2 corresponding to performing a handover of the terminal device from the third cell to the first cell through the layer 1/layer 2 handover (namely, the scenario 2). The data transmission mode information a1 may indicate the data transmission mode 1 corresponding to the scenario 1, and the data transmission mode information a2 may indicate the data transmission mode 3 corresponding to the scenario 2.
(2) P2 sets of data transmission mode information respectively corresponding to performing handovers of the terminal device from P2 cells (namely, the first cell and the third cell) other than the second cell in the W cells to the second cell through the layer 1/layer 2 handover: For example, the P2 sets of data transmission mode information include data transmission mode information a3 corresponding to performing a handover of the terminal device from the first cell to the second cell through the layer 1/layer 2 handover (namely, the scenario 1) and data transmission mode information a4 corresponding to performing a handover of the terminal device from the third cell to the second cell through the layer 1/layer 2 handover (namely, the scenario 2). The data transmission mode information a3 may indicate the data transmission mode 1 corresponding to the scenario 1, and the data transmission mode information a4 may indicate the data transmission mode 3 corresponding to the scenario 2.
(3) P3 sets of data transmission mode information respectively corresponding to performing handovers of the terminal device from P3 cells (namely, the first cell and the second cell) other than the third cell in the W cells to the third cell through the layer 1/layer 2 handover. For example, the P3 sets of data transmission mode information include data transmission mode information a5 corresponding to performing a handover of the terminal device from the first cell to the third cell through the layer 1/layer 2 handover (namely, the scenario 2) and data transmission mode information a6 corresponding to performing a handover of the terminal device from the second cell to the third cell through the layer 1/layer 2 handover (namely, the scenario 2). The data transmission mode information a5 may indicate the data transmission mode 3 corresponding to the scenario 2, and the data transmission mode information a6 may indicate the data transmission mode 3 corresponding to the scenario 2.

P1, P2, and P3 are positive integers. When W=3, P1=P2=P3=2.

For the implementation 1, in S502, the access network device may send an RRC message to the terminal device in the first cell, where the RRC message includes configuration information for the W cells, and the configuration information for the W cells includes the N sets of data transmission mode information. For example, configuration information for the first cell may include related information of the first cell, configuration information for the terminal device in the first cell, and the P1 sets of data transmission mode information. Configuration information for the second cell includes related information of the second cell, configuration information for the terminal device in the second cell, and the P2 sets of data transmission mode information. Configuration information for the third cell includes related information of the third cell, configuration information for the terminal device in the third cell, and the P3 sets of data transmission mode information. In a CU-DU split network architecture, a possible manner of generating the configuration information for the first cell is as follows: The DU 1 generates configuration information (excluding the P1 sets of data transmission mode information) for the first cell, and sends the configuration information to the CU. The CU generates the P1 sets of data transmission mode information, generates the complete configuration information for the first cell in combination with the configuration information (excluding the P1 sets of data transmission mode information) for the first cell received from the DU 1, and sends the complete configuration information to the terminal device. For manners of generating the configuration information for the second cell and the third cell, refer to the manner of generating the configuration information for the first cell. Details are not described herein.

In another possible implementation, each set of data transmission mode information may be split into two parts, denoted as a first part and a second part. The access network device notifies the terminal device of the first part through step S502, and notifies the terminal device of the second part through step S504-a. Using the configuration information for the first cell as an example, a data transmission mode of the handover from the second cell to the first cell is the data transmission mode 1, to be specific, skipping performing PDCP re-establishment, skipping performing PDCP data recovery, and skipping sending a random access preamble or an uplink reference signal to obtain uplink synchronization information for a target cell. The data transmission mode 1 is split into a first part and a second part. The first part includes "skipping performing PDCP re-establishment, and skipping performing PDCP data recovery", and the second part includes "skipping sending a random access preamble or an uplink reference signal to obtain uplink synchronization information for a target cell". In a CU-DU split network architecture, information of the first part is notified by the CU to the terminal device by using an RRC message, and information of the second part is notified by the DU to the terminal device by using a layer 1/layer 2 handover command. In this manner, a DU to which a source cell belongs needs to sense the information of the second part, in other words, the CU needs to notify the DU of the information of the second part, or the DU autonomously determines the information of the second part based on a status of the UE (for example, the DU may determine that TAs for the source cell and the target cell are approximate, and may not send the random access preamble to re-obtain the uplink synchronization information for the target cell, but still use the TA for the source cell in the target cell). An advantage of the splitting into two parts is that a relatively static behavior, for example, information about whether the PDCP re-establishment needs to be performed, may be preconfigured for the terminal device through S502, and a relatively dynamic behavior, for example, that the access network device cannot determine in advance whether the terminal device needs to initiate a random access process (or whether the terminal device is to send the random access preamble or the uplink reference signal to obtain the uplink synchronization information for the target cell) during a handover, may be determined before the access network device performs S504-a, so that an appropriate data transmission mode for the terminal can be more accurately selected, to improve handover reliability.

In addition, in this embodiment, using the first cell as an example, the configuration information for the terminal device in the first cell and the P1 sets of data transmission mode information may be collectively referred to as context information for the terminal device in the first cell.

### (2) Implementation 2

The N sets of data transmission mode information for the terminal device include j sets of data transmission mode information respectively corresponding to performing handovers of the terminal device from cells in j cell groups to an i^{th} cell through the layer 1/layer 2 handover, where the i^{th} cell may be any cell in the W cells, and a cell other than the i^{th} cell in the W cells belongs to the j cell groups, where j is a positive integer.

For example, the W cells include the first cell, the second cell, and the third cell. In this case, the N sets of data transmission mode information for the terminal device may include at least one of the following (1), (2), and (3):
(1) Q1 sets of data transmission mode information respectively corresponding to performing handovers of the terminal device from cells in Q1 cell groups to the first cell through the layer 1/layer 2 handover. A cell other than the first cell in the W cells belongs to the Q1 cell groups, where Q1 is a positive integer.

For example, the Q1 cell groups may be obtained through division depending on whether the cell other than the first cell in the W cells and the first cell belong to a same DU and/or a same CU. For example, if the second cell and the first cell belong to different DUs controlled by a same CU, and the third cell and the first cell belong to different DUs controlled by the same CU, the second cell and the third cell belong to a same cell group. For another example, if the second cell and the first cell belong to a same DU, and the third cell and the first cell belong to different DUs, the second cell and the third cell belong to different cell groups. Alternatively, if a handover scenario in which the terminal device is handed over from the second cell to the first cell is the same as a handover scenario in which the terminal device is handed over from the third cell to the first cell, the second cell and the third cell belong to a same cell group; or if a handover scenario in which the terminal device is handed over from the second cell to the first cell is different from a handover scenario in which the terminal device is handed over from the third cell to the first cell, the second cell and the third cell belong to different cell groups. In this case, the Q1 cell groups may correspond to Q1 handover scenarios. For the handover scenario, refer to the foregoing descriptions.

When the first cell and the second cell belong to the DU 1, and the third cell belongs to the DU 2, cells (namely, the second cell and the third cell) other than the first cell in the W cells belong to two cell groups (in this case, Q1=2) that are respectively a cell group 1 and a cell group 2. The Q1 sets of data transmission mode information may include data transmission mode information b1 corresponding to a handover of the terminal device from a cell (namely, the second cell) in the cell group 1 to the first cell and data transmission mode information b2 corresponding to a handover of the terminal device from a cell (namely, the third cell) in the cell group 2 to the first cell.

(2) Q2 sets of data transmission mode information respectively corresponding to performing handovers of the terminal device from cells in Q2 cell groups to the second cell through the layer 1/layer 2 handover. A cell other than the second cell in the W cells belongs to the Q2 cell groups, where Q2 is a positive integer.

When the first cell and the second cell belong to the DU 1, and the third cell belongs to the DU 2, cells (namely, the first cell and the third cell) other than the second cell in the W cells belong to two cell groups (in this case, Q2=2) that are respectively a cell group 3 and a cell group 4. The Q2 sets of data transmission mode information may include data transmission mode information b3 corresponding to a handover of the terminal device from a cell (namely, the first cell) in the cell group 3 to the second cell and data transmission mode information b4 corresponding to a handover of the terminal device from a cell (namely, the third cell) in the cell group 4 to the second cell.

(3) Q3 sets of data transmission mode information respectively corresponding to performing handovers of the terminal device from cells in Q3 cell groups to the third cell through the layer 1/layer 2 handover. A cell other than the third cell in the W cells belongs to the Q3 cell groups, where Q3 is a positive integer.

When the first cell and the second cell belong to the DU 1, and the third cell belongs to the DU 2, cells (namely, the first cell and the second cell) other than the third cell in the W cells belong to one cell group (in this case, Q3=1), namely, a cell group 5. The Q3 sets of data transmission mode information may include data transmission mode information b5 corresponding to a handover of the terminal device from a cell (namely, the first cell or the second cell) in the cell group 5 to the third cell.

For the implementation 2, in S502, the access network device may send an RRC message to the terminal device in the first cell, where the RRC message includes configuration information for the W cells, and the configuration information for the W cells includes the N sets of data transmission mode information. For example, configuration information for the first cell may include related information of the first cell, configuration information for the terminal device in the first cell, and the Q1 sets of data transmission mode information. Configuration information for the second cell includes related information of the second cell, configuration information for the terminal device in the second cell, and the Q2 sets of data transmission mode information. Configuration information for the third cell includes related information of the third cell, configuration information for the terminal device in the third cell, and the Q3 sets of data transmission mode information. In a CU-DU split network architecture, a possible manner of generating the configuration information for the first cell is as follows: The DU 1 generates configuration information (excluding the Q1 sets of data transmission mode information) for the first cell, and sends the configuration information to the CU. The CU generates the Q1 sets of data transmission mode information, generates the complete configuration information for the first cell in combination with the configuration information (excluding the Q1 sets of data transmission mode information) for the first cell received from the DU 1, and sends the complete configuration information to the terminal device. For manners of generating the configuration information for the second cell and the third cell, refer to the manner of generating the configuration information for the first cell. Details are not described herein.

In another possible implementation, each set of data transmission mode information may be split into two parts, denoted as a first part and a second part. The access network device notifies the terminal device of the first part through step S502, and notifies the terminal device of the second part through step S504-a. For a specific process, refer to the implementation 1. Details are not described herein again.

Optionally, the foregoing method may further include S503-a to S506-a (namely, a handover mode 1) or S503-b to S505-b (namely, a handover mode 2).

S503-a: The terminal device performs beam-level measurement on the W cells to obtain beam-level measurement results, and reports the beam-level measurement results to the access network device.

S504-a: The access network device sends the layer 1 or layer 2 handover instruction to the terminal device based on the beam-level measurement results, where the handover instruction instructs the terminal device to be handed over from the first cell to the second cell. Correspondingly, the terminal device receives the handover instruction, and is handed over from the first cell to the second cell.

S505-a: The terminal device sends uplink information to the access network device in the second cell, where the uplink information notifies the access network device that the terminal device has been handed over from the first cell to the second cell through the layer 1/layer 2 handover. Correspondingly, the access network device may receive the uplink information, and determine, based on the uplink information, that the second cell is the serving cell of the terminal device.

For example, for the uplink information, refer to the descriptions in S305-a. In addition, in Embodiment 1, the uplink information may include indication information 2, or the uplink information is indication information 2 (for details, refer to descriptions in S506-a).

In a possible implementation, the terminal device may further send an acknowledgment instruction for the handover command to the access network device to which the first cell belongs, to indicate that the handover command is successfully received.

S506-a: The terminal device and the access network device perform data transmission in the second cell based on third data transmission mode information.

In a possible implementation, the access network device may determine which set of data transmission mode information in the N sets of data transmission mode information for the terminal device is to be used after the terminal device is handed over to the second cell. For example, if the access network device determines to use the third data transmission mode information in the N sets of data transmission mode information (the third data transmission mode information may be the data transmission mode information a3 or the data transmission mode information b3), the access network device may send indication information 1 to the terminal device in the first cell, where the indication information 1 indicates the terminal device to perform data transmission with the access network device in the second cell based on the third data transmission mode information in the N sets of data transmission mode information after the terminal device is handed over from the first cell to the second cell. Correspondingly, the terminal device may receive the indication information 1, and learn, based on the indication information 1 without autonomous determining, which set of data transmission mode information in the N sets of data transmission mode information is to be used in the second cell to perform data transmission with the access network device. This reduces power consumption of the terminal device. For example, the indication information 1 (or the following indication information 2 or indication information 3) may indicate the third transmission mode information in a plurality of manners. For example, the indication information 1 includes an index of the third data transmission mode information, and the index of the third data transmission mode information may be included in the third data transmission mode information, or may be independent of the third data transmission mode information. This is not specifically limited. The handover instruction and the indication information 1 may be carried in a same message, or may be carried in different messages.

In another possible implementation, the terminal device may determine which set of data transmission mode information in the N sets of data transmission mode information is to be used after the terminal device is handed over to the second cell. For example, if the terminal device determines to use the third data transmission mode information in the N sets of data transmission mode information (the third data transmission mode information may be the data transmission mode information a3 or the data transmission mode information b3), the terminal device may send the indication information 2 to the access network device in the second cell, where the indication information 2 indicates the access network device to perform data transmission with the terminal device in the second cell based on the third data transmission mode information in the N sets of data transmission mode information after the terminal device is handed over from the first cell to the second cell. Correspondingly, the access network device may receive the indication information 2, and learn, based on the indication information 2 without autonomous determining, which set of data transmission mode information in the N sets of data transmission mode information is to be used in the second cell to perform data transmission with the access network device. This reduces power consumption of the access network device.

The terminal device may send the indication information 2 to the access network device in the second cell in a plurality of manners. For example, the terminal device sends a physical layer message (for example, the physical layer message is carried on a PUCCH or a physical random access channel (physical random access channel, PRACH)) to the access network device in the second cell, where the physical layer message includes the indication information 2. For another example, the terminal device sends a MAC CE or an RRC message to the access network device in the second cell, where the MAC CE or the RRC message includes the indication information 2.

For example, the uplink information and the indication information 2 may be different information. In this case, the uplink information and the indication information 2 may be carried in different messages, or may be carried in a same message. Alternatively, as described in S505-a, "the uplink information may include the indication information 2". Alternatively, as described in S505-a, "the uplink information is the indication information 2", to be specific, by using the indication information 2, the terminal device may notify the access network device that the terminal device has been handed over from the first cell to the second cell through the layer 1/layer 2 handover (this may be understood as an implicit notification), and notify the access network device of the data transmission mode information that should be used.

In still another possible implementation, the access network device and the terminal device may separately determine which set of data transmission mode information in the N sets of data transmission mode information is to be used after the terminal device is handed over to the second cell. In this case, the access network device does not need to send the indication information 1 to the terminal device, and the terminal device does not need to send the indication information 2 to the access network device, to save transmission resources.

S503-b: The terminal device performs measurement on the W cells to obtain beam-level measurement results, and determines, based on the beam-level measurement results, to be handed over from the first cell to the second cell.

S504-b: The terminal device sends handover complete information to the access network device in the second cell, where the handover complete information notifies the access network device that the terminal device has been handed over from the first cell to the second cell.

S505-b: The access network device and the terminal device perform data transmission in the second cell based on third data transmission mode information.

In a possible implementation, the terminal device may determine which set of data transmission mode information in the N sets of data transmission mode information is to be used after the terminal device is handed over to the second cell. For example, if the terminal device determines to use the third data transmission mode information in the N sets of data transmission mode information (the third data transmission mode information may be the data transmission mode information a3 or the data transmission mode information b3), the terminal device may send indication information 3 to the access network device in the second cell, where the indication information 3 indicates the access network device to perform data transmission with the terminal device in the second cell based on the third data transmission mode information in the N sets of data transmission mode information after the terminal device is handed over from the first cell to the second cell. For a manner in which the terminal device sends the indication information 3, refer to the foregoing manner in which the terminal device sends the indication information 2. For example, the handover complete information and the indication information 3 may be different information, the handover complete information may include the indication information 3, or the handover complete information is the indication information 3. For details, refer to the descriptions related to the uplink information and the indication information 2 in S506-a.

In another possible implementation, the access network device and the terminal device may separately determine which set of data transmission mode information in the N sets of data transmission mode information is to be used after the terminal device is handed over to the second cell. For example, the access network device may learn, based on the uplink information, that the terminal device is handed over from the first cell to the second cell, and may further determine to use the third data transmission mode information in the N sets of data transmission mode information (the third data transmission mode information may be the data transmission mode information a3 or the data transmission mode information b3).

It may be understood that the foregoing uses S503-a to S506-a (namely, a cell handover triggered by the access network device based on the beam-level measurement results) and S503-b to S505-b (namely, a cell handover triggered by the terminal device based on the beam-level measurement results) to describe two implementations in which the terminal device is handed over from the first cell to the second cell through the layer 1/layer 2 handover. After the access network device determines that the terminal device is handed over from the first cell to the second cell, the access network device may stop sending downlink data to the terminal device, but the access network device and the terminal device do not release the N sets of data transmission mode information for the terminal device. In other words, after the cell handover of the terminal device, the access network device and the terminal device still store the N sets of data transmission mode information for the terminal device.

Further, in a possible implementation, after the terminal device is handed over to the second cell, the terminal device may be further handed over from the second cell to the first cell through the layer 1/layer 2 handover. In this case, the access network device may send first indication information to the terminal device in the second cell. The first indication information indicates the terminal device to perform data transmission with the access network device based on first data transmission mode information in the N sets of data transmission mode information after the terminal device is handed over from the second cell to the first cell through a cell handover of a first type. For an implementation of the first indication information, refer to the foregoing indication information 1. Alternatively, the terminal device may send third indication information and fourth indication information to the access network device in the first cell, where the third indication information indicates that the terminal device has been handed over from the second cell to the first cell through a cell handover of a first type, and the fourth indication information indicates the access network device to perform data transmission with the terminal device based on first data transmission mode information in the N sets of data transmission mode information. For an implementation of the third indication information, refer to the foregoing uplink information; and for an implementation of the fourth indication information, refer to the foregoing indication information 2. Alternatively, for an implementation of the third indication information, refer to the foregoing handover complete information; and for an implementation of the fourth indication information, refer to the foregoing indication information 3. In this way, the access network device and the terminal device may perform data transmission in the first cell based on the first data transmission mode information (for example, the data transmission mode information a1 or the data transmission mode information b1).

In another possible implementation, after the terminal device is handed over to the second cell, the terminal device may be further handed over from the second cell to the third cell through the layer 1/layer 2 handover. In this case, the access network device may send second indication information to the terminal device in the second cell. The second indication information indicates the terminal device to perform data transmission with the access network device based on second data transmission mode information in the N sets of data transmission mode information after the terminal device is handed over from the second cell to the third cell through a cell handover of a first type. For an implementation of the second indication information, refer to the foregoing indication information 1. Alternatively, the terminal device may send fifth indication information and sixth indication information to the access network device in the third cell, where the fifth indication information indicates that the terminal device has been handed over from the second cell to the third cell through a cell handover of a first type, and the sixth indication information indicates the access network device to perform data transmission with the terminal device based on second data transmission mode information in the N sets of data transmission mode information. For an implementation of the fifth indication information, refer to the foregoing uplink information; and for an implementation of the sixth indication information, refer to the foregoing indication information 2. Alternatively, for an implementation of the fifth indication information, refer to the foregoing handover complete information; and for an implementation of the sixth indication information, refer to the foregoing indication information 3. In this way, the access network device and the terminal device may perform data transmission in the third cell based on the second data transmission mode information (for example, the data transmission mode information a6 or the data transmission mode information b5).

It may be understood that, for a specific implementation in which the terminal device is handed over from the second cell to the first cell or the third cell through the layer 1/layer 2 handover, refer to the descriptions of the handover of the terminal device from the first cell to the second cell. In other words, after the access network device sends the N sets of data transmission mode information to the terminal device in the first cell, and a plurality of layer 1/layer 2 handovers of the terminal device are continuously performed between the W cells, both the access network device and the terminal device may use the corresponding data transmission mode information, and the access network device does not need to send the corresponding data transmission mode information to the terminal device, to effectively save the transmission resources.

In addition, after the access network device sends the N sets of data transmission mode information to the terminal device, if the access network device determines that a second condition is met, the access network device may release the N sets of data transmission mode information for the terminal device, and/or indicate the terminal device to release the N sets of data transmission mode information.

That the second condition is met may include at least one of the following: (1) The terminal device needs to be handed over to a fourth cell through the layer-3 handover. (2) The terminal device needs to enter the idle mode or the inactive mode. (3) The N sets of data transmission mode information for the terminal device need to be changed.

For (1), in S503-a, in addition to performing beam-level measurement on the W cells, the terminal device may further perform cell-level measurement on a plurality of cells including the W cells, to obtain cell-level measurement results, and report the cell-level measurement results to the access network device. Further, in S504-a, the access network device may trigger the layer 1/layer 2 handover or the layer 3 handover based on the beam-level measurement results and the cell-level measurement results. The process shown in FIG. 5 is described by using the example in which the access network device triggers the layer 1/layer 2 handover. In another possible embodiment, if the access network device determines, based on the beam-level measurement results reported by the terminal device, that none of the candidate cells corresponding to the layer 1/layer 2 handover is suitable for serving as the target cell, the access network device may perform the layer 3 handover. Because the terminal device may be handed over to a cell, for example, the fourth cell, other than the W cells by performing the layer 3 handover (in other words, the fourth cell is a cell other than the W cells), the access network device may release the N sets of data transmission mode information for the terminal device, and/or indicate the terminal device to release the N sets of data transmission mode information.

Similarly, in S503-b, in addition to performing beam-level measurement on the W cells, the terminal device may further perform cell-level measurement on a plurality of cells including the W cells, to obtain cell-level measurement results. Further, the terminal device triggers the layer 1/layer 2 CHO or the layer 3 CHO based on the beam-level measurement results and the cell-level measurement results. The process shown in FIG. 5 is described by using the example in which the access network device triggers the layer 1/layer 2 CHO. In another possible embodiment, if the terminal device determines that a handover criterion for the layer 1/layer 2 CHO is not met, but a handover criterion for the layer 3 CHO is met, the terminal device may trigger the layer 3 CHO. Because the terminal device may be handed over to a cell (for example, the fourth cell) other than the W cells by performing the layer 3 handover, the access network device may release the N sets of data transmission mode information for the terminal device, and/or indicate the terminal device to release the N sets of data transmission mode information.

For (2), during continuous cell handovers of the terminal device, the access network device always maintains an RRC connection to the terminal device. If the access network device determines that the RRC connection to the terminal device needs to be disconnected (for example, the terminal device needs to enter the idle mode), the access network device may release the N sets of data transmission mode information for the terminal device, and/or indicate the terminal device to release the N sets of data transmission mode information.

For (3), because the N sets of data transmission mode information are preconfigured by the access network device for the terminal device before continuous cell handovers of the terminal device, the N sets of data transmission mode information may need to be changed subsequently for a plurality of reasons. Therefore, when the N sets of data transmission mode information need to be changed, the access network device may release the N sets of data transmission mode information, and/or indicate the terminal device to release the N sets of data transmission mode information. Optionally, when determining that the configuration information for any one of the W cells needs to be changed, the access network device may release the N sets of data transmission mode information, and/or indicate the terminal device to release the N sets of data transmission mode information. In this case, after the access network device and the terminal device release the N sets of data transmission mode information, a subsequent procedure may be performed with reference to the manner shown in FIG. 3 or the manner shown in FIG. 5. For example, when the terminal device is handed over from another cell to the first cell through the layer 1/layer 2 handover, and a plurality of sets of data transmission mode information that are configured last time need to be changed, the access network device may perform S502. In other words, the access network device and the terminal device release all the plurality of sets of data transmission mode information that are configured last time, and then the access network device reconfigures a plurality of sets of data transmission mode information for the terminal device.

It may be understood that "when the terminal device is handed over from another cell to the first cell through the layer 1/layer 2 handover, and a plurality of sets of data transmission mode information that are configured last time need to be changed, the access network device may perform S502" may further include another possible case. For example, when the terminal device is handed over from another cell to the first cell through the layer 1/layer 2 handover, and a plurality of sets of data transmission mode information that are configured last time need to be changed, in S502, the access network device may send an RRC reconfiguration message to the terminal device, where the RRC reconfiguration message includes N sets of data transmission mode information, and is for modifying the plurality of sets of data transmission mode information that are configured last time. Correspondingly, after receiving the RRC reconfiguration message, the terminal device may modify, based on the RRC reconfiguration message, the plurality of sets of data transmission mode information that are configured last time. In this case, the access network device and the terminal device do not release all the plurality of data transmission modes that are configured last time, but modify the plurality of data transmission modes that are configured last time. For example, the plurality of sets of data transmission modes that are configured last time include the data transmission mode information d1 corresponding to the handover of the terminal device from the second cell to the first cell and the data transmission mode information a2 corresponding to the handover of the terminal device from the third cell to the first cell, and the N sets of data transmission mode information include the data transmission mode information a1 corresponding to the handover of the terminal device from the second cell to the first cell. In this case, it indicates that the "data transmission mode information d1" is modified to the "data transmission mode information a1", and the data transmission mode information a2 remains unchanged.

For example, in addition to releasing the N sets of data transmission mode information, the access network device and the terminal device may further release the configuration information for the W cells and/or the configuration information for the terminal device in the W cells.

The access network device may indicate the terminal device to release the N sets of data transmission mode information in a plurality of manners. In a possible implementation, the access network device may send indication information 4 to the terminal device, where the indication information 4 indicates the terminal device to release the N sets of data transmission mode information. For example, the indication information 4 may be an information element carried in an RRC message (for example, an RRC reconfiguration message), so that after receiving the RRC message, the terminal device may release the N sets of data transmission mode information.

According to the method in Embodiment 1, the access network device may send configuration information for a plurality of cells to the terminal device in the first cell. The configuration information of each of the plurality of cells includes data transmission mode information corresponding to a handover of the terminal device from another cell to the cell. Therefore, when performing continuous handovers between different cells, the terminal device may directly use the corresponding data transmission mode information, to effectively save the transmission resources.

### Embodiment 2

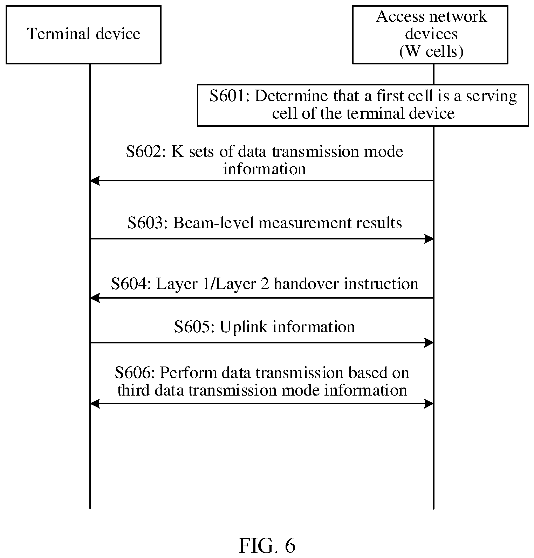

FIG. 6 is a schematic flowchart corresponding to a communication method according to Embodiment 2 of this application. As shown in FIG. 6, the method includes the following steps:
S601: An access network device determines that a first cell is a serving cell of a terminal device.
S602: The access network device sends K sets of data transmission mode information to the terminal device in the first cell, where the K sets of data transmission mode information indicate K data transmission modes.

For example, the access network device may determine K handover scenarios in which the terminal device is handed over between W cells, to obtain the K data transmission modes corresponding to the K handover scenarios. For example, if the W cells belong to a same DU, the handover scenario in which the terminal device is handed over between the W cells is the scenario 1. In this case, K=1, and the data transmission mode may be the data transmission mode 1. For another example, if the W cells belong to different DUs controlled by a same CU, and include two or more cells of a same DU (for example, the first cell and a second cell belong to a DU 1, and a third cell belongs to a DU 2), the handover scenarios in which the terminal device is handed over between the W cells include the scenario 1 and the scenario 2. In this case, K=2, and the K data transmission modes may include the data transmission mode 1 and the data transmission mode 3.

In addition, the access network device may further send configuration information for the W cells to the terminal device in the first cell. Using the first cell as an example, configuration information for the first cell may include related information of the first cell and configuration information for the terminal device in the first cell. A difference from the configuration information for the first cell in Embodiment 1 lies in that the configuration information for the first cell in Embodiment 2 may not include the data transmission mode information.

Optionally, the method may further include the following steps:
S603: The terminal device performs beam-level measurement on the W cells to obtain beam-level measurement results, and reports the beam-level measurement results to the access network device.
S604: The access network device sends a layer 1 or layer 2 handover instruction to the terminal device based on the beam-level measurement results, where the handover instruction instructs the terminal device to be handed over from the first cell to the second cell. Correspondingly, the terminal device receives the handover instruction, and is handed over from the first cell to the second cell.
S605: The terminal device sends uplink information to the access network device in the second cell, where the uplink information notifies the access network device that the terminal device has been handed over from the first cell to the second cell through the layer 1/layer 2 handover. Correspondingly, the access network device may determine, based on the uplink information, that the second cell is the serving cell of the terminal device.

For example, for the uplink information, refer to the descriptions in S305-a.

S606: The terminal device and the access network device perform data transmission based on third data transmission mode information.

In a possible implementation, the access network device may determine which set of data transmission mode information in the K sets of data transmission mode information is to be used after the terminal device is handed over to the second cell. For example, if the access network device determines to use the third data transmission mode information in the K sets of data transmission mode information, the access network device may send indication information 1 to the terminal device in the first cell, where the indication information 1 indicates the terminal device to perform data transmission with the access network device in the second cell based on the third data transmission mode information in the K sets of data transmission mode information after the terminal device is handed over from the first cell to the second cell. Correspondingly, the terminal device may receive the indication information 1, and learn, based on the indication information 1 without autonomous determining, which set of data transmission mode information in the K sets of data transmission mode information is to be used in the second cell to perform data transmission with the access network device. This reduces power consumption of the terminal device.

In another possible implementation, the terminal device may determine which set of data transmission mode information in the K sets of data transmission mode information is to be used after the terminal device is handed over to the second cell. For a specific process, refer to S506-a. Details are not described herein again. In another possible implementation, the access network device and the terminal device may separately determine which set of data transmission mode information in the K sets of data transmission mode information is to be used after the terminal device is handed over to the second cell. For a specific process, refer to S506-a. Details are not described herein again.

According to the method in Embodiment 2, the access network device may determine the K data transmission modes corresponding to the K handover scenarios in which the terminal device is handed over between the W cells, and send the K sets of data transmission mode information to the terminal device in the first cell. In this way, during continuous handovers of the terminal device between different cells, the access network device may indicate the data transmission mode information that should be used to the terminal device, to effectively save transmission resources.

In Embodiment 1 and Embodiment 2, an implementation process of embodiments of this application is described from a perspective of communication between the access network device and the terminal device. The access network device may include the CU and the one or more DUs. Therefore, with reference to Embodiment 3, the following describes the implementation process of embodiments of this application from a perspective of communication between the CU, the DU, and the terminal device.

### Embodiment 3

In Embodiment 3, an interaction process between the CU, the DU, and the terminal device is described based on Embodiment 1 (an interaction process between the CU, the DU, and the terminal device in Embodiment 2 may be implemented with reference).

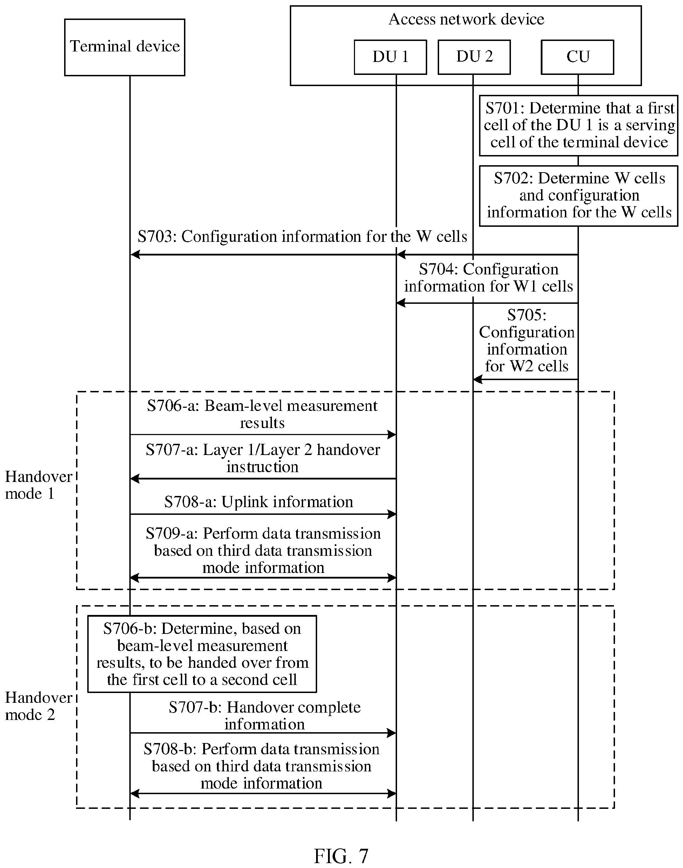

FIG. 7 is a schematic flowchart corresponding to a communication method according to Embodiment 3 of this application. As shown in FIG. 7, the method includes the following steps.

S701: The CU determines that a first cell of the DU 1 is a serving cell of the terminal device.

S702: The CU determines W cells and configuration information for the W cells for the terminal device, where the configuration information for the W cells includes N sets of data transmission mode information.

Herein, an example in which the W cells include the first cell, a second cell, and a third cell is used. The access network device includes the CU, the DU 1, and the DU 2, the first cell and the second cell belong to the DU 1, and the third cell belongs to the DU 2. For specific content included in the configuration information for the W cells, refer to Embodiment 1.

For example, the CU may determine the W cells based on a measurement result of the terminal device (for example, a cell-level measurement result of the terminal device), and may further determine the N sets of data transmission mode information for the terminal device with reference to a location relationship between the W cells (for example, whether the W cells belong to a same CU and/or a same DU).

S703: The CU sends the configuration information for the W cells to the terminal device through the DU 1. Correspondingly, the terminal device may receive the configuration information for the W cells.

In a possible implementation, the CU may send an RRC message to the terminal device through the DU 1. In this case, the configuration information for the W cells may be placed in a container (container), and is transparently transmitted to the terminal device through the DU 1.

In another possible implementation, the CU may send the configuration information for the W cells to the DU 1 by using an F1 interface message, and then the DU 1 sends the configuration information for the W cells to the terminal device.

S704: The CU sends configuration information for W1 cells to the DU 1, where W1 is less than or equal to W.

For example, the W1 cells belong to the W cells, and may include cells (for example, the first cell and the second cell) of the DU 1. Optionally, the W1 cells further include a candidate cell (for example, the third cell, to be specific, the terminal device may be handed over from the first cell or the second cell to the third cell) of the terminal device that exists when the serving cell of the terminal device is the cell of the DU 1. Considering that the W cells may further include another cell, but the cell is neither a cell of the DU 1 nor the candidate cell, the CU does not need to send configuration information for the cell to the DU 1, to save transmission resources.

It may be understood that configuration information for the candidate cell (for example, the third cell) in the W1 cells may include the complete configuration information described above, for example, related information of the third cell, configuration information for the terminal device in the third cell, and corresponding data transmission mode information; or may include only configuration information related to a handover from the DU 1, for example, a PCI of the third cell, so that the DU 1 learns that the terminal device may be handed over between the W1 cells. In other words, the configuration information for the candidate cell sent by the CU to the DU 1 may not need to include the complete configuration information that is for the cell and that needs to be sensed by the terminal device.

For example, the CU may send the configuration information for the W1 cells to the DU 1 by using an F1 interface message. The F1 interface message may be, for example, downlink RRC message transfer (DL RRC message transfer) or a UE context modification request (UE context modification request).

For S703 and S704, in a possible manner, the CU may send the configuration information for the W cells and the configuration information for the W1 cells to the DU 1 by using a same F1 interface message. Alternatively, the CU sends the configuration information for the W cells to the DU 1 by using the F1 interface message, so that the DU 1 may obtain the configuration information for the W1 cells based on the configuration information for the W cells, store the configuration information for the W1 cells, and send the configuration information for the W cells to the terminal device. In this case, the CU does not need to send the configuration information for the W1 cells to the DU 1.

S705: The CU sends configuration information for W2 cells to the DU 2, where W2 is less than or equal to W.

For example, the W2 cells belong to the W cells, and may include a cell (for example, the third cell) of the DU 2. Optionally, the W2 cells further include a candidate cell (for example, the first cell and the second cell, to be specific, the terminal device may be handed over from the third cell to the first cell or the second cell) of the terminal device that exists when the serving cell of the terminal device is the cell of the DU 2. For another implementation, refer to the descriptions in S704.

It may be understood that the foregoing provides descriptions by using an example in which the CU determines the W cells and the configuration information for the W cells. In another possible embodiment, the DU may determine the W cells based on a measurement result of the terminal device (for example, a beam-level measurement result of the terminal device), and report the W cells to the CU. For example, the DU 1 determines the first cell and the second cell, and reports the first cell and the second cell to the CU; and the DU 2 determines the third cell, and reports the third cell to the CU. In this way, the CU may determine the configuration information for the W cells based on a location relationship between the W cells.

Alternatively, the DU may determine the W cells based on a measurement result of the terminal device (for example, a beam-level measurement result of the terminal device), and report the W cells to the CU, so that the CU determines a location relationship between the W cells, and notifies the DU 1 and the DU 2 of the location relationship. The DU 1 and the DU 2 may determine the configuration information for the W cells based on the location relationship between the W cells. Further, the CU may obtain the configuration information (for example, the N sets of data transmission mode information) for the W cells from the DU 1 and the DU 2. There may be a plurality of implementations in which the CU obtains the N sets of data transmission mode information from the DU 1 and the DU 2. For example, the CU may send a request message 1 to the DU 1 to which the first cell and the second cell belong, where the request message 1 requests data transmission mode information. In this way, the DU 1 may send P1 sets of transmission mode information and P2 sets of data transmission mode information to the CU (refer to the implementation 1 in Embodiment 1). Alternatively, the DU 1 may send Q1 sets of transmission mode information and Q2 sets of data transmission mode information to the CU (refer to the implementation 2 in Embodiment 1). In addition, the CU sends a request message 2 to the DU 2 to which the third cell belongs, where the request message 2 requests data transmission mode information, so that the DU 2 may send P3 sets of transmission mode information to the CU (refer to the implementation 1 in Embodiment 1), or the DU 2 may send Q3 sets of transmission mode information to the CU (refer to the implementation 2 in Embodiment 1). In this case, in S704, the CU may send configuration information for the third cell to the DU 1, without sending configuration information for the first cell and configuration information for the second cell to the DU 1. In S705, the CU may send the configuration information for the first cell and the configuration information for the second cell to the DU 2, without sending the configuration information for the third cell to the DU 2. Alternatively, the CU may not need to perform S704 and S705, in other words, the CU does not need to send the configuration information for the corresponding cell to the DU 1 or the DU 2.

Optionally, the method may further include S403-a to S406-a, or include S403-b to S405-b.

S706-a: The terminal device performs beam-level measurement on the W cells to obtain beam-level measurement results, and reports the beam-level measurement results to the DU 1.

S707-a: The DU 1 sends a layer 1 or layer 2 handover instruction to the terminal device based on the beam-level measurement results, where the handover instruction instructs the terminal device to be handed over from the first cell to the second cell. Correspondingly, the terminal device receives the handover instruction, and is handed over from the first cell to the second cell.

S708-a: The terminal device sends uplink information to the DU 1 in the second cell, where the uplink information notifies the DU 1 that the terminal device has been handed over from the first cell to the second cell through a layer 1/layer 2 handover. Correspondingly, the DU 1 may receive the uplink information, and stop, after determining that the second cell is the serving cell of the terminal device, sending downlink data to the terminal device in the first cell.

For a specific implementation of the uplink information, refer to Embodiment 1.

S709-a: The terminal device and the DU 1 perform data transmission in the second cell based on third data transmission mode information.

For a specific implementation herein, refer to Embodiment 1.

S706-b: The terminal device performs measurement on the W cells to obtain beam-level measurement results, and determines, based on the beam-level measurement results, to be handed over from the first cell to the second cell.

S707-b: The terminal device sends handover complete information to the DU 1 in the second cell, where the handover complete information notifies the DU 1 that the terminal device has been handed over from the first cell to the second cell.

S708-b: The DU 1 and the terminal device perform data transmission in the second cell based on third data transmission mode information.

For a related implementation herein, refer to Embodiment 1.

In addition, after determining that a second condition is met, the CU may indicate the DUs (for example, the DU 1 and the DU 2) to which the W cells belong to release the N sets of data transmission mode information for the terminal device, and/or indicate the terminal device to release the N sets of data transmission mode information.

There may be a plurality of manners in which the CU indicates the DU to release the N sets of data transmission mode information for the terminal device. For example, the CU sends a UE context release command (UE context modification request) to the DU, where the UE context release command includes an identifier of the terminal device, and the DU releases the N sets of data transmission mode information for the terminal device based on the UE context release command.

For an implementation in which the CU indicates the terminal device to release the N sets of data transmission mode information, refer to the implementation in which the access network device indicates the terminal device to release the N sets of data transmission mode information in Embodiment 1.

In Embodiment 3, an intra-DU cell handover process, namely, a handover from the first cell of the DU 1 to the second cell, is described. In this scenario, the CU sends the N sets of data transmission mode information to the terminal device through the DU 1. Therefore, when the terminal device needs to be handed over from the first cell to the second cell, the DU 1 may determine the data transmission mode information that needs to be used, and send an index of the data transmission mode information that needs to be used to the terminal device. Alternatively, the terminal device may determine the data transmission mode information that needs to be used, and send an index of the data transmission mode information that needs to be used to the DU 1. Alternatively, the terminal device and the DU 1 separately determine the data transmission mode information that needs to be used. It should be understood that, in an inter-DU cell handover process, the CU sends the N sets of data transmission mode information to the terminal device through the DU 1. When the terminal device needs to be handed over (for example, the terminal device needs to be handed over from the second cell of the DU 1 to the third cell of the DU 2), the DU 1 may determine data transmission mode information that needs to be used, and send an index of the data transmission mode information that needs to be used to the terminal device. When the terminal device is handed over to the third cell in a specified data transmission mode, the terminal device may notify the DU 2 of the index of the data transmission mode information, or the DU 2 autonomously determines the data transmission mode information that needs to be used.

In another possible embodiment, the CU may not send the N sets of data transmission mode information to the terminal device. In this case, when the terminal device needs to be handed over, a source DU may determine data transmission mode information that needs to be used, and send the data transmission mode information that needs to be used to the terminal device. For example, the data transmission mode information that needs to be used is sent to the terminal device in the handover command (this is different from Embodiment 3 in which the index of the data transmission mode information is sent to the terminal device).

An embodiment of this application provides another communication method. The communication method may include: After determining that a first cell is a serving cell of a terminal device, an access network device may send cell group information of W cells to the terminal device in the first cell, where the W cells include the first cell, and the cell group information is for determining a data transmission mode corresponding to performing a handover of the terminal device from one cell in the W cells to another cell in the W cells through a cell handover of a first type. In other words, the access network device may send the cell group information to the terminal device in the first cell, so that when the terminal device is continuously handed over between different cells, the terminal device may determine, based on groups to which a source cell from which and a target cell to which the terminal device is handed over belong, a data transmission mode that needs to be used, to effectively save transmission resources.

The following describes the method in detail with reference to Embodiment 4. A data transmission mode in Embodiment 4 may be the data transmission mode described in the example 2 above.

### Embodiment 4

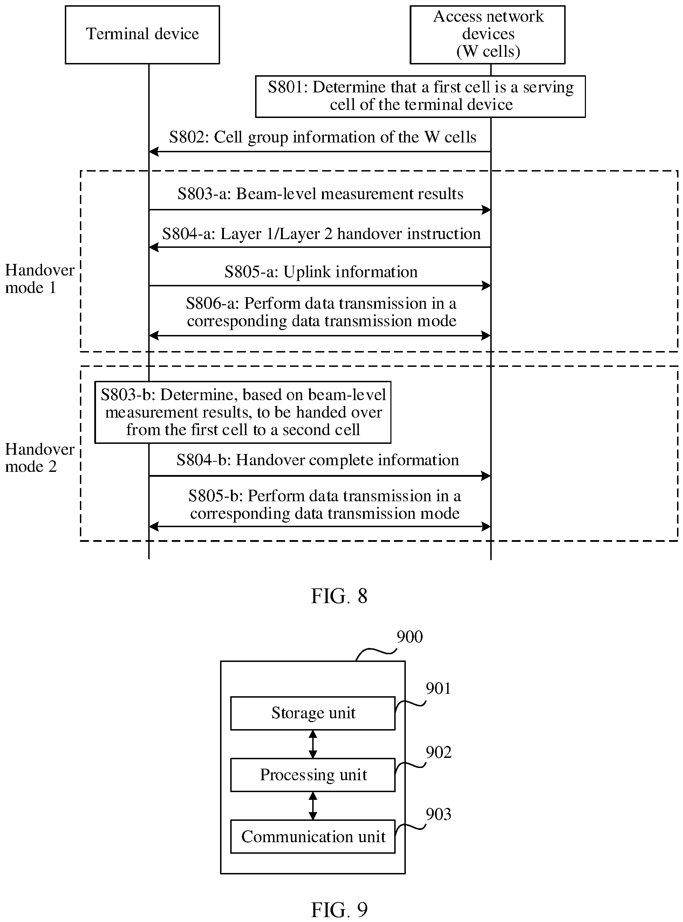

FIG. 8 is a schematic flowchart corresponding to a communication method according to Embodiment 4 of this application. As shown in FIG. 8, the method includes the following steps.

S801: An access network device determines that a first cell is a serving cell of a terminal device.

S802: The access network device sends cell group information to the terminal device in the first cell. Correspondingly, the terminal device may receive the cell group information. Further, the access network device and the terminal device may store the cell group information.

For example, before S802, the access network device may determine W cells for the terminal device, and then determine the cell group information based on the W cells. The terminal device may perform continuous handovers between the W cells. The cell group information is for determining a data transmission mode corresponding to a handover of the terminal device from one cell in the W cells to another cell in the W cells (for example, a data transmission mode corresponding to performing a handover of the terminal device from one cell in the W cells to another cell in the W cells through a layer 1/layer 2 handover). The data transmission mode is, for example, the data transmission mode A or the data transmission mode B described above.

For example, the cell group information may include at least one of the following: PDCP-layer group information, RLC-layer group information, or MAC-layer group information. The following describes the cell group information by using an example in which the W cells include a cell 1, a cell 2, a cell 3, and a cell 4, where the cell 1 is the first cell.

### (1) PDCP-layer group information

For example, the access network device may determine the PDCP-layer group information based on a PDCP-layer behavior corresponding to the handover of the terminal device between the W cells.

In a possible implementation, PDCP re-establishment does not need to be performed when the terminal device is handed over between the W cells. For example, the W cells are served by a same CU, in other words, the W cells belong to DUs controlled by a same CU. To be specific, the PDCP-layer behavior corresponding to the handover of the terminal device between the W cells includes PDCP data recovery or maintenance for a data radio bearer, and includes PDCP discard or maintenance for a signaling radio bearer. In this case, using the data radio bearer as an example, the access network device may divide the W cells into two PDCP groups. For example, a PDCP group 1 includes {the cell, the cell 2}, and a PDCP group 2 includes {the cell 3, the cell 4}. When a source cell from which and a target cell to which the terminal device is handed over are in a same PDCP group, the PDCP maintenance is performed (in other words, the PDCP data recovery is not performed). When a source cell from which and a target cell to which the terminal device is handed over are not in a same PDCP group, the PDCP data recovery may be performed.

It should be understood that, for some types of data radio bearers, for example, an unacknowledged mode (unacknowledged mode, UM) data radio bearer, the PDCP-layer behavior may not be constrained by the foregoing groups, and the PDCP maintenance is always performed; for some other types of data radio bearers, for example, an acknowledged mode (acknowledged mode, AM) data radio bearer, the PDCP-layer behavior should be constrained by the foregoing groups.

In addition, for the signaling radio bearer, the access network device may also group the W cells. In a possible case, a grouping result for the signaling radio bearer is the same as a grouping result for the data radio bearer, in other words, the grouping result for the data radio bearer may be reused. When the source cell from which and the target cell to which the terminal device is handed over are in the same PDCP group, the PDCP maintenance is performed. When the source cell from which and the target cell to which the terminal device is handed over are not in the same PDCP group, the PDCP discard may be performed.

In another possible implementation, when the terminal device is handed over between the W cells, PDCP re-establishment may need to be performed. For example, the W cells are served by different CUs, in other words, the W cells belong to DUs controlled by different CUs. To be specific, the PDCP-layer behavior corresponding to the handover of the terminal device between the W cells includes the PDCP re-establishment, PDCP data recovery, or PDCP maintenance. In this case, the access network device may perform second-level grouping on the W cells. First-level grouping indicates whether the PDCP re-establishment is to be performed. For example, a PDCP group 1-1 {the cell 1, the cell 2, the cell 3} and a PDCP group 1-2 {the cell 4} are obtained through the first-level grouping. When the source cell and the target cell of the terminal device are in a same group of the first-level grouping, the PDCP re-establishment does not need to be performed. When the source cell and the target cell of the terminal device are not in a same group of the first-level grouping, the PDCP re-establishment needs to be performed. Further, when the PDCP re-establishment does not need to be performed, the second-level grouping is performed. For example, a PDCP group 2-1 {the cell 1, the cell 2} and a PDCP group 2-2 {the cell 3} are obtained through the second-level grouping. When the source cell and the target cell of the terminal device are in a same group of the second-level grouping, the PDCP maintenance is performed. When the source cell and the target cell of the terminal device are not in a same group of the second-level grouping, the PDCP data recovery is performed.

The foregoing process may be understood as descriptions of the PDCP-layer behavior for the data radio bearer. For a PDCP-layer behavior for the signaling radio bearer, refer to the foregoing descriptions. A difference lies in that for the signaling radio bearer, grouping behaviors include "PDCP re-establishment, PDCP discard, and PDCP maintenance". Details are not described herein again.

In addition, the PDCP-layer group information may be for performing different cell grouping for each bearer, and a PDCP-layer behavior corresponding to each bearer may be determined based on a cell group for the bearer; or a same group may be shared between a plurality of bearers. This is not limited in this application.

### (2) RLC-layer group information

An RLC-layer behavior corresponding to the handover of the terminal device between the W cells includes RLC re-establishment or maintenance. The access network device may divide the W cells into two RLC groups. For example, an RLC group 1 includes {the cell, the cell 2}, and an RLC group 2 includes {the cell 3, the cell 4}. When the source cell and the target cell of the terminal device are not in a same group, the RLC re-establishment is performed. When the source cell and the target cell of the terminal device are in a same group, the RLC maintenance is performed.

For example, when the PDCP-layer behavior corresponding to the handover of the terminal device between the W cells includes the PDCP data recovery or maintenance, the RLC-layer group information and the PDCP-layer group information may be bound. For example, when the PDCP maintenance is performed, the RLC maintenance is also performed. When the PDCP data recovery is performed, the RLC re-establishment needs to be performed. In this case, only the PDCP-layer group information or only the RLC-layer group information may be configured, to implicitly indicate the PDCP-layer behavior or the RLC-layer behavior.

### (3) MAC-layer group information

As described above, when there is no association relationship between random access and MAC reset, the following three possible implementations may be included.

In a first possible implementation, a MAC-layer behavior corresponding to the handover of the terminal device between the W cells includes the MAC reset or MAC maintenance, and the access network device may obtain MAC groups through division based on the MAC-layer behavior. For example, the access network device may divide the W cells into two MAC groups. For example, a MAC group 1 includes {the cell, the cell 2}, and a MAC group 2 includes {the cell 3, the cell 4}. When the source cell from which and the target cell to which the terminal device is handed over are in a same MAC group, the MAC maintenance is performed. When the source cell from which and the target cell to which the terminal device is handed over are not in a same MAC group, the MAC reset may be performed.

In a second possible implementation, a MAC-layer behavior corresponding to the handover of the terminal device between the W cells includes the MAC reset, MAC partial reset, or MAC maintenance. In this case, the access network device may perform second-level grouping on the W cells. First-level grouping indicates whether the MAC reset is to be performed. For example, a MAC group 1-1 {the cell 1, the cell 2, the cell 3} and a MAC group 1-2 {the cell 4} are obtained through the first-level grouping. When the source cell and the target cell of the terminal device are in a same group of the first-level grouping, the MAC reset does not need to be performed. When the source cell and the target cell of the terminal device are not in a same group of the first-level grouping, the MAC reset needs to be performed. Further, when the MAC reset does not need to be performed, the second-level grouping is performed. For example, a MAC group 2-1 {the cell 1, the cell 2} and a MAC group 2-2 {the cell 3} are obtained through the second-level grouping. When the source cell and the target cell of the terminal device are in a same group of the second-level grouping, the MAC maintenance is performed. When the source cell and the target cell of the terminal device are not in a same group of the second-level grouping, the MAC partial reset is performed.

In a third possible implementation, whether to perform random access in a handover process needs to be indicated by the access network device to the terminal device. Therefore, in this embodiment of this application, the access network device may alternatively obtain MAC groups through division depending on whether to perform random access in the handover process (or whether the terminal device needs to send an uplink message in the handover process to obtain uplink synchronization information for the target cell). For example, the access network device may divide the W cells into two MAC groups. For example, a MAC group 1 includes {the cell 1, the cell 2, the cell 3 1, and a MAC group 2 includes {the cell 4}. When the source cell and the target cell of the terminal device are not in a same group, the terminal device performs random access. When the source cell and the target cell of the terminal device are in a same group, the terminal device does not perform random access. When the terminal device performs random access, the access network device may cooperate to complete a random access process based on a received uplink message (for example, a random access preamble). When the terminal device does not perform random access, the access network device may actively schedule the terminal device through the target cell, or pre-configure an uplink grant resource or a PUCCH resource for the terminal device.

The first possible implementation and the third possible implementation may coexist. In this case, the terminal device may determine, in the first possible implementation, whether the MAC reset or maintenance is to be performed, and determine, in the third possible implementation, whether to perform random access. The second possible implementation and the third possible implementation may coexist. In this case, the terminal device may determine, in the second possible implementation, whether the MAC reset, partial reset, or maintenance is to be performed, and determine, in the third possible implementation, whether to perform random access.

When there is an association relationship between random access and MAC reset, the access network device may obtain MAC groups through division based on a MAC-layer behavior or depending on whether to perform random access. For example, the MAC-layer behavior corresponding to the handover of the terminal device between the W cells includes the MAC reset or MAC maintenance, and the MAC groups obtained by the access network device through division based on the MAC-layer behavior may include a MAC group 1 {the cell, the cell 2} and a MAC group 2 {the cell 3, the cell 4}. When the source cell from which and the target cell to which the terminal device is handed over are in a same MAC group, the MAC maintenance is performed, and skipping performing random access is implicitly indicated. When the source cell from which and the target cell to which the terminal device is handed over are not in a same MAC group, the MAC reset may be performed, and performing random access is implicitly indicated. In the following descriptions of this embodiment of this application, the case in which "there is an association relationship between random access and MAC reset" is used as an example for description.

For example, in S802, the access network device may send an RRC message to the terminal device in the first cell, where the RRC message includes the cell group information, and optionally, further includes configuration information for the W cells. Using the first cell in the W cells as an example, configuration information for the first cell may include related information of the first cell and configuration information for the terminal device in the first cell. For the related information of the first cell and the configuration information for the terminal device in the first cell, refer to the foregoing descriptions. Details are not described herein again.

Optionally, the foregoing method may further include S803-a to S806-a (namely, a handover mode 1) or S803-b to S805-b (namely, a handover mode 2).

S803-a: The terminal device performs beam-level measurement on the W cells to obtain beam-level measurement results, and reports the beam-level measurement results to the access network device.

S804-a: The access network device sends a layer 1 or layer 2 handover instruction to the terminal device based on the beam-level measurement results, where the handover instruction instructs the terminal device to be handed over from the first cell to the second cell. Correspondingly, the terminal device receives the handover instruction, and is handed over from the first cell to the second cell.

For example, the second cell may be any one of the cell 2, the cell 3, or the cell 4.

S805-a: The terminal device sends uplink information to the access network device in the second cell, where the uplink information notifies the access network device that the terminal device has been handed over from the first cell to the second cell through the layer 1/layer 2 handover. Correspondingly, the access network device may receive the uplink information, and determine, based on the uplink information, that the second cell is the serving cell of the terminal device.

S806-a: The terminal device and the access network device perform data transmission in the second cell in a corresponding data transmission mode.

In a possible implementation, after the terminal device is handed over to the second cell, the terminal device may determine, based on the cell group information, groups to which the first cell and the second cell belong, to determine a data transmission mode that needs to be used. In addition, after the terminal device is handed over to the second cell, the access network device may determine, based on the cell group information, the groups to which the first cell and the second cell belong, to determine a data transmission mode that needs to be used. In other words, the access network device and the terminal device may separately determine the data transmission mode that needs to be used after the terminal device is handed over to the second cell, and the data transmission modes determined by the access network device and the terminal device are the same. For a specific process, refer to S506-a.

The following uses an example to describe how the terminal device determines, when performing the cell handover between the W cells, the data transmission mode that needs to be used. For example, the cell group information configured by the access network device for the terminal device includes: a PDCP group 1 {the cell 1, the cell 2} and a PDCP group 2 {the cell 3, the cell 4}; an RLC group 1 {the cell, the cell 2} and an RLC group 2 {the cell 3, the cell 4}; and a MAC group 1 {the cell 1, the cell 2, the cell 3} and a MAC group 2 {the cell 4}. A current serving cell (the source cell) of the terminal device is the cell 1. When the terminal device receives a handover command, and the handover command indicates a handover to the cell 2, because both the cell 1 and the cell 2 belong to the PDCP group 1, the RLC group 1, and the MAC group 1, the terminal device may perform PDCP maintenance and RLC maintenance, and does not perform random access. Correspondingly, the access network device also performs corresponding behaviors. After the terminal device is handed over to the cell 2, the serving cell of the terminal is the cell 2. When the terminal device receives a handover command again, and the handover command indicates a handover to the cell 4, because the cell 2 and the cell 4 belong to different PDCP groups, different RLC groups, and different MAC groups, the terminal device may perform PDCP data recovery, RLC re-establishment, and random access. Correspondingly, the access network device also performs corresponding behaviors.

The following uses another example to describe how the terminal device determines, when performing the cell handover between the W cells, the data transmission mode that needs to be used. For example, the cell group information indicates at least one group, and each of the at least one group includes at least one of the W cells. For example, groups indicated by the cell group information configured by the access network device for the terminal device include a group 1 {the cell 1, the cell 2} and a group 2 {the cell 3, the cell 4}.

A current serving cell (the source cell) of the terminal device is the cell 1. When the terminal device receives a handover command, and the handover command indicates a handover to the cell 2, because both the cell 1 and the cell 2 belong to a same group, the terminal device may perform a behavior 1. When the terminal device receives a handover command to be handed over from the cell 2 to the cell 3, because the cell 2 and the cell 3 do not belong to a same group, the terminal device may perform a behavior 2.

The behavior 1 and/or the behavior 2 may be agreed on in a protocol. For example, the behavior 1 includes at least one of the PDCP maintenance, the RLC maintenance, or the MAC partial reset, and the behavior 2 includes at least one of the PDCP data recovery, the RLC re-establishment, or the MAC reset. Specific content of the behavior 1 and the behavior 2 is not limited, and may include a possible behavior of at least one of a PDCP layer, an RLC layer, or a MAC layer. For a specific behavior, refer to the descriptions of the "data transmission mode".

It may be understood that, when a plurality of cells included in a same group belong to a same DU, it means that a PDCP-layer configuration and an RLC-layer configuration that are applied by the terminal device in the plurality of cells may be maintained, and a MAC-layer configuration applied by the terminal device in the plurality of cells may be partially maintained. Therefore, when the source cell and the target cell belong to the same group, the behavior 1 may include the PDCP maintenance, the RLC maintenance, and the MAC partial reset. When a plurality of cells in different groups belong to different DUs (for example, the cell 1 and the cell 3 belong to different DUs), it means that a PDCP-layer configuration, an RLC-layer configuration, and a MAC-layer configuration that are applied by the terminal device in the plurality of cells may need to be updated. Therefore, when the source cell and the target cell belong to different groups, the behavior 2 may include the PDCP data recovery, the RLC re-establishment, and the MAC reset.

The behavior 1 and/or the behavior 2 may alternatively be configured by the access network device. For example, at least one of the following is configured by using an RRC message: (1) a PDCP-layer behavior to be performed when the source cell and the target cell belong to the same group; (2) a PDCP-layer behavior to be performed when the source cell and the target cell do not belong to the same group; (3) an RLC-layer behavior to be performed when the source cell and the target cell belong to the same group; (4) an RLC-layer behavior to be performed when the source cell and the target cell do not belong to the same group; (5) a MAC-layer behavior to be performed when the source cell and the target cell belong to the same group; or (6) a MAC-layer behavior to be performed when the source cell and the target cell do not belong to the same group.

It should be understood that there are a plurality of representation manners of the group in this embodiment of this application. For example, one group may be one list, and the list includes identifiers of a plurality of cells in the group. Optionally, the list further includes an identifier of the group. For another example, one group identifier may be configured for each cell, and cells with a same group identifier belong to a same group. For example, a group identifier is configured for the cell 1, and the same group identifier is configured for the cell 2. This manner indicates that the cell 1 and the cell 2 belong to a same group.

In addition, in a CU-DU split scenario, for example, the access network device includes the CU and one or more DUs, and the CU may send the cell group information to the terminal device, and may further send the cell group information to each DU controlled by the CU. If the PDCP layer is located on the CU, and the RLC layer and the MAC layer are located on the DU, the PDCP-layer behavior included in the data transmission mode may be determined by the CU, and the RLC-layer behavior and the MAC-layer behavior included in the data transmission mode may be determined by the DU.

For example, for the PDCP-layer behavior, in a possible implementation, after completing sending the handover command, a DU that sends the handover command notifies the CU of identification information of the target cell. Because the CU also maintains the cell group information, the CU may determine the PDCP-layer behavior based on the groups to which the source cell and the target cell belong. In another possible implementation, after the terminal device accesses the target cell (for example, after the terminal device successfully sends the uplink message to the target cell), a DU to which the target cell belongs notifies the CU of identification information of the target cell, so that the CU may determine the PDCP-layer behavior based on the groups to which the source cell and the target cell belong. This implementation is also applicable to determining of a CU-side behavior in Embodiment 1 to Embodiment 3.

For the RLC-layer behavior and the MAC-layer behavior, because the DU to which the target cell belongs also maintains the foregoing cell group information, the DU to which the target cell belongs may determine the RLC-layer behavior and the MAC-layer behavior based on the groups to which the source cell and the target cell belong. This implementation is also applicable to determining of a DU-side behavior in Embodiment 1 to Embodiment 3.

It may be understood that, in another possible embodiment, there may be a correspondence between the cell group information and a handover scenario. For example, in a scenario 1, the two cells (namely, the source cell and the target cell) are managed by a same DU, and may be in a same RLC group and a same MAC group. In a scenario 2, the two cells are managed by different DUs, and may be in different RLC groups and different MAC groups. When there is the correspondence between the cell group information and the handover scenario, the CU may not need to send the cell group information to the DU, and the DU to which the target cell belongs may determine the RLC-layer behavior and the MAC-layer behavior based on the handover scenario. Specifically, the DU to which the target cell belongs may perform determining depending on whether the terminal device is handed over from a cell managed by the DU. For example, when the terminal device is handed over from the cell 1 to the cell 2, a DU to which the cell 2 belongs knows that the source cell of the terminal device is also managed by the DU. Therefore, the RLC maintenance and the MAC maintenance may be performed. For example, when the terminal device is handed over from the cell 1 to the cell 3, a DU to which the cell 3 belongs knows that the source cell of the terminal device is not managed by the DU. Therefore, the RLC re-establishment and the MAC reset may be performed.

S803-b: The terminal device performs measurement on the W cells to obtain beam-level measurement results, and determines, based on the beam-level measurement results, to be handed over from the first cell to the second cell.

S804-b: The terminal device sends handover complete information to the access network device in the second cell, where the handover complete information notifies the access network device that the terminal device has been handed over from the first cell to the second cell.

S805-b: The access network device and the terminal device perform data transmission in the second cell in a corresponding data transmission mode.

In addition, after the access network device sends the cell group information to the terminal device, if the access network device determines that at least one of the following is met: the terminal device needs to enter an idle mode or an inactive mode, the terminal device needs to be handed over to a cell other than the W cells through a layer-3 handover, or the cell group information needs to be changed, the access network device may release the cell group information, and/or indicate the terminal device to release the cell group information. For details, refer to the descriptions in Embodiment 1.

According to the method in Embodiment 4, the cells are grouped, so that configuration content can be effectively reduced, thereby effectively saving transmission resources. In addition, the cells may be grouped separately based on behaviors of different protocol layers, so that configuration is more flexible.

In Embodiment 1, for each target cell, data transmission modes for handovers from different cells to the target cell are configured. When there are a large quantity of cells for continuous handovers, configuration content in Embodiment 1 is large, and the configuration content can be effectively simplified according to Embodiment 4. In Embodiment 2, each handover scenario corresponds to one data transmission mode. However, in some possible cases, there may be different data transmission modes in a same handover scenario (for example, an intra-DU cell handover). For example, a cell A, a cell B, and a cell C are cells managed by a same DU, and random access does not need to be performed for a handover from the cell A to the cell B to obtain uplink synchronization information for the cell B, but needs to be performed for a handover from the cell A to the cell C to obtain uplink synchronization information for the cell C. According to Embodiment 4, the data transmission mode may be decoupled from the handover scenario, to improve configuration flexibility.

For Embodiment 4, in the CU-DU split scenario, the CU may send the cell group information to the terminal device through the DU. In this way, after the terminal device is handed over, the terminal device and a target DU may separately determine, based on the cell group information, the data transmission mode that needs to be used. In another possible embodiment, the CU may not send the cell group information to the terminal device. In this case, after the terminal device is handed over, a source DU may determine, based on the cell group information, the data transmission mode that needs to be used, and send data transmission mode information that needs to be used to the terminal device. In the foregoing manner, in an intra-DU handover scenario, both the source DU (namely, the target DU) and the terminal device learn of the data transmission mode that needs to be used; and in an inter-DU handover scenario, the target DU may autonomously determine the data transmission mode, or the terminal device notifies the target DU of the data transmission mode in the target cell.

For Embodiment 1 to Embodiment 4, it may be understood that:
(1) Embodiment 1 to Embodiment 4 are described by using an example in which the serving cell of the terminal device is one cell. In another possible case, for example, when the terminal device operates in a dual connectivity manner, the solutions in Embodiment 1 to Embodiment 4 may be applied to a handover of a master node in dual connectivity, or may be applied to addition or a change of a secondary node (secondary node, SN)/secondary cell group (secondary cell group, SCG). In addition, when the foregoing CHO is applicable to the addition or the change of the secondary node/secondary cell group, the CHO may also be referred to as conditional primary secondary cell group cell addition (conditional primary SCG cell addition, CPA) or a conditional primary secondary cell group cell change (conditional primary SCG cell change, CPC). A primary secondary cell group cell (primary SCG cell, PSCell) is a primary cell of the secondary node/secondary cell group.
(2) Step numbers in the flowcharts described in Embodiment 1 to Embodiment 4 are merely examples of executing procedures and do not constitute a limitation on an execution sequence of the steps. In embodiments of this application, there is no strict execution sequence between steps that have no time sequence dependency relationship with each other. Not all the steps shown in the flowcharts are mandatory steps. Some steps may be deleted from the flowcharts based on an actual requirement, or other possible steps may be added to the flowcharts based on an actual requirement.
(3) The foregoing focuses on differences between different embodiments in Embodiment 1 to Embodiment 4, and content other than the differences may be mutually referenced in Embodiment 1 to Embodiment 4. In addition, in a same embodiment, different implementations or different examples may also be mutually referenced.

The foregoing mainly describes the solutions provided in embodiments of this application from a perspective of interaction between communication apparatuses. It may be understood that, to implement the foregoing functions, the access network device and the terminal device may include corresponding hardware structures and/or software modules for implementing the functions. A person skilled in the art should be easily aware that, with reference to the units and algorithm steps in the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access network device and the terminal device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When the integrated unit is used, FIG. 9 is a possible example block diagram of an apparatus according to an embodiment of this application. As shown in FIG. 9, the apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, respectively configured to perform a receiving operation and a sending operation. The apparatus 900 may further include a storage unit 901 that is configured to store program code and/or data of the apparatus 900.

The apparatus 900 may be the access network device in the foregoing embodiments. The processing unit 902 may support the apparatus 900 in performing the actions of the access network device in the foregoing method examples. Alternatively, the processing unit 902 mainly performs an internal action of the access network device in the method examples, and the communication unit 903 may support communication between the apparatus 900 and another device.

For example, in an embodiment, the processing unit 902 is configured to determine that a first cell is a serving cell of a terminal device. The communication unit 903 is configured to send N sets of data transmission mode information for the terminal device to the terminal device in the first cell, where N is a positive integer. The N sets of data transmission mode information include first data transmission mode information corresponding to performing a handover of the terminal device from a second cell to the first cell through a cell handover of a first type and/or second data transmission mode information corresponding to performing a handover of the terminal device from the second cell to a third cell through the cell handover of the first type.

The apparatus 900 may be the terminal device in the foregoing embodiments. The processing unit 902 may support the apparatus 900 in performing the actions of the terminal device in the foregoing method examples. Alternatively, the processing unit 902 mainly performs an internal action of the terminal device in the method examples, and the communication unit 903 may support communication between the apparatus 900 and another device.

For example, in an embodiment, the processing unit 902 is configured to determine that a first cell is a serving cell of the terminal device. The communication unit 903 is configured to receive N sets of data transmission mode information from an access network device in the first cell, where N is a positive integer. The N sets of data transmission mode information include first data transmission mode information corresponding to performing a handover of the terminal device from a second cell to the first cell through a cell handover of a first type and/or second data transmission mode information corresponding to performing a handover of the terminal device from the second cell to a third cell through the cell handover of the first type.

It should be understood that the division of the foregoing apparatus into the units is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and remaining units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form of software invoked by a processing element.

In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the form of the chip, the sending unit is an interface circuit that is of the chip and that is configured to send a signal to another chip or apparatus.

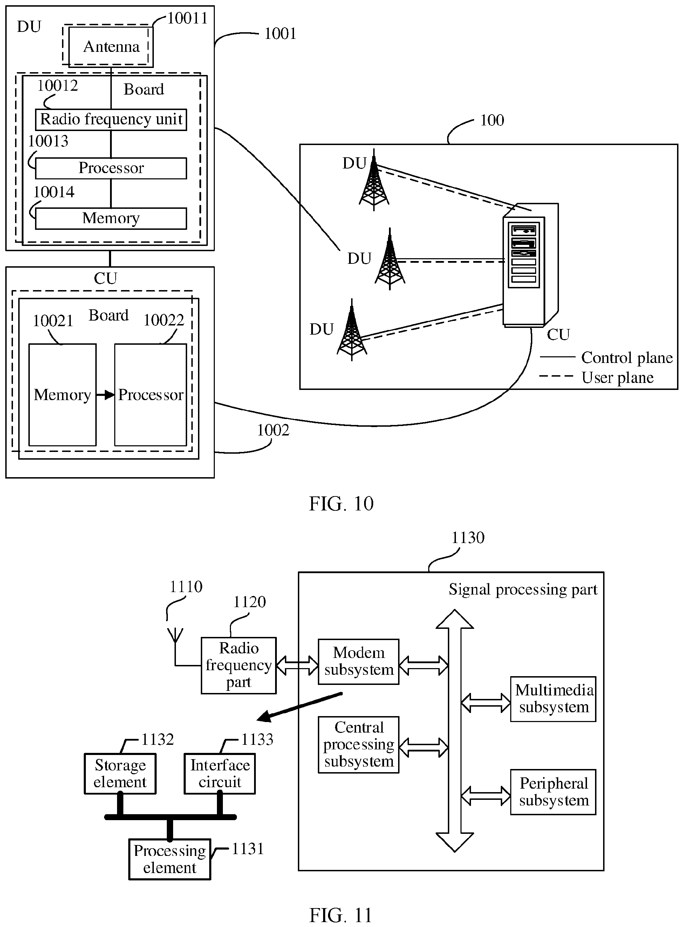

FIG. 10 is a diagram of a structure of an access network device according to an embodiment of this application. The access network device (or a base station) may be used in the communication system shown in FIG. 1, to perform a function of the access network device in the foregoing method embodiments. As shown in FIG. 10, the access network device 100 may include one or more DUs 1001 and one or more CUs 1002. The DU 1001 may include at least one antenna 10011, at least one radio frequency unit 10012, at least one processor 10013, and at least one memory 10014. The DU 1001 is mainly configured to receive and send a radio frequency signal, perform conversion between the radio frequency signal and a baseband signal, and perform a part of baseband processing. The CU 1002 may include at least one processor 10022 and at least one memory 10021.

The CU 1002 is mainly configured to perform baseband processing, control the access network device, and so on. The DU 1001 and the CU 1002 may be physically disposed together, or may be physically disposed separately, in other words, in a distributed base station. The CU 1002 is a control center of the access network device, may also be referred to as a processing unit, and is mainly configured to complete a baseband processing function. For example, the CU 1002 may be configured to control the access network device to perform an operation procedure related to the access network device in the foregoing method embodiments.

In addition, optionally, the access network device 100 may include one or more radio frequency units, one or more DUs, and one or more CUs. The DU may include at least one processor 10013 and at least one memory 10014, the radio frequency unit may include at least one antenna 10011 and at least one radio frequency unit 10012, and the CU may include at least one processor 10022 and at least one memory 10021.

In an example, the CU 1002 may include one or more boards. A plurality of boards may jointly support a radio access network (for example, a 5G network) of a single access standard, or may respectively support radio access networks (for example, an LTE network, a 5G network, or another network) of different access standards. The memory 10021 and the processor 10022 may serve one or more boards. In other words, a memory and a processor may be disposed on each board. Alternatively, a plurality of boards may share a same memory and a same processor. In addition, a necessary circuit may further be disposed on each board. The DU 1001 may include one or more boards. A plurality of boards may jointly support a radio access network (for example, a 5G network) of a single access standard, or may respectively support radio access networks (for example, an LTE network, a 5G network, or another network) of different access standards. The memory 10014 and the processor 10013 may serve one or more boards. In other words, a memory and a processor may be disposed on each board. Alternatively, a plurality of boards may share a same memory and a same processor. In addition, a necessary circuit may further be disposed on each board.

The access network device shown in FIG. 10 can implement each process related to the access network device in the foregoing method embodiments. Operations and/or functions of the modules in the access network device shown in FIG. 10 are respectively for implementing corresponding procedures in the foregoing method embodiments. For details, refer to the descriptions in the foregoing method embodiments. To avoid repetition, detailed descriptions are properly omitted herein.

FIG. 11 is a diagram of a structure of a terminal device according to an embodiment of this application. The terminal device may be used in the communication system shown in FIG. 1, and is configured to implement operations of the terminal device in the foregoing embodiments. As shown in FIG. 11, the terminal device includes an antenna 1110, a radio frequency part 1120, and a signal processing part 1130. The antenna 1110 is connected to the radio frequency part 1120. In a downlink direction, the radio frequency part 1120 receives, by using the antenna 1110, information sent by a network device, and sends the information sent by the network device to the signal processing part 1130 for processing. In an uplink direction, the signal processing part 1130 processes information of the terminal device, and sends the information to the radio frequency part 1120. After processing the information of the terminal device, the radio frequency part 1120 sends the information to the network device by using the antenna 1110.

The signal processing part 1130 may include a modem subsystem, configured to process each communication protocol layer of data; may further include a central processing subsystem, configured to process an operating system and an application layer of the terminal device; and in addition, may further include another subsystem, such as a multimedia subsystem and a peripheral subsystem, where the multimedia subsystem is configured to control a camera, a screen display, and the like of the terminal device, and the peripheral subsystem is configured to implement connection to another device. The modem subsystem may be a separately disposed chip.

The modem subsystem may include one or more processing elements 1131, for example, include a main control CPU and another integrated circuit. In addition, the modem subsystem may further include a storage element 1132 and an interface circuit 1133. The storage element 1132 is configured to store data and a program. However, a program for performing the method performed by the terminal device in the foregoing methods may not be stored in the storage element 1132, but is stored in a memory outside the modem subsystem, and is loaded by the modem subsystem for use. The interface circuit 1133 is configured to communicate with another subsystem.

The modem subsystem may be implemented by a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiments. The storage element may be a storage element located on a same chip as the processing element, that is, an on-chip storage element.

In another implementation, the program for performing the method performed by the terminal device in the foregoing methods may be in a storage element located on a different chip from the processing element, that is, an off-chip storage element. In this case, the processing element invokes or loads the program from the off-chip storage element to an on-chip storage element, to invoke and perform the method performed by the terminal device in the foregoing method embodiments.

In still another implementation, units of the terminal device that implement the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing methods may be integrated together, and implemented in a form of SoC. The SoC chip is configured to implement the foregoing methods. At least one processing element and a storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods performed by the terminal device that are provided in the foregoing method embodiments. The processing element may perform some or all steps performed by the terminal device in a first manner, to be specific, by invoking the program stored in the storage element; may perform some or all steps performed by the terminal device in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by a processor. A function of the processing element may be the same as the function of the processing unit described in FIG. 9. For example, the processing element may be a general-purpose processor, for example, a CPU, or may be one or more integrated circuits configured to implement the foregoing method, for example, one or more ASICs, one or more digital signal processors DSPs, or one or more FPGAs, or a combination of at least two of the integrated circuit forms. The storage element may be implemented by a memory. A function of the storage element may be the same as the function of the storage unit described in FIG. 9. The storage element may be a memory, or may be a general name of a plurality of memories.

The terminal device shown in FIG. 11 can implement each process related to the terminal device in the foregoing method embodiments. Operations and/or functions of the modules in the terminal device shown in FIG. 11 are respectively for implementing corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. The term "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of the appended claims of this application and their equivalent technologies.

## Claims

1. A communication method, wherein the method is applied to an access network device or a module in the access network device, cells managed by the access network device comprise a first cell, a second cell, and a third cell, and the method comprises:
determining that the first cell is a serving cell of a terminal device; and
sending N sets of data transmission mode information for the terminal device to the terminal device in the first cell, wherein N is a positive integer, wherein
the N sets of data transmission mode information comprise first data transmission mode information corresponding to performing a handover of the terminal device from the second cell to the first cell through a cell handover of a first type and/or second data transmission mode information corresponding to performing a handover of the terminal device from the second cell to the third cell through the cell handover of the first type.

2. The method according to claim 1, wherein after the terminal device is handed over from the first cell to the second cell through the cell handover of the first type, the method further comprises:
sending first indication information to the terminal device in the second cell, wherein the first indication information indicates the terminal device to perform data transmission with the access network device based on the first data transmission mode information in the N sets of data transmission mode information after the terminal device is handed over from the second cell to the first cell through the cell handover of the first type; or
sending second indication information to the terminal device in the second cell, wherein the second indication information indicates the terminal device to perform data transmission with the access network device based on the second data transmission mode information in the N sets of data transmission mode information after the terminal device is handed over from the second cell to the third cell through the cell handover of the first type.

3. The method according to claim 1 or 2, wherein the method further comprises:
receiving third indication information and fourth indication information from the terminal device in the first cell, wherein the third indication information indicates that the terminal device has been handed over from the second cell to the first cell through the cell handover of the first type, and the fourth indication information indicates the access network device to perform data transmission with the terminal device based on the first data transmission mode information in the N sets of data transmission mode information; or
receiving fifth indication information and sixth indication information from the terminal device in the third cell, wherein the fifth indication information indicates that the terminal device has been handed over from the second cell to the third cell through the cell handover of the first type, and the sixth indication information indicates the access network device to perform data transmission with the terminal device based on the second data transmission mode information in the N sets of data transmission mode information.

4. The method according to any one of claims 1 to 3, wherein the method further comprises:
determining that at least one of the following is met: the terminal device needs to enter an idle mode or an inactive mode, the terminal device needs to be handed over to a fourth cell through a cell handover of a second type, and the N sets of data transmission mode information need to be changed; and
releasing the N sets of data transmission mode information, and/or sending seventh indication information to the terminal device, wherein the seventh indication information indicates the terminal device to release the N sets of data transmission mode information.

5. The method according to any one of claims 1 to 4, wherein the determining that the first cell is a serving cell of a terminal device comprises:
when the terminal device accesses the first cell in idle mode or inactive mode, determining that the first cell is the serving cell of the terminal device; or
when the terminal device is handed over to the first cell through the cell handover of the second type, determining that the first cell is the serving cell of the terminal device.

6. The method according to claim 4 or 5, wherein the cell handover of the second type is a cell handover that is based on a cell-level measurement result.

7. The method according to any one of claims 1 to 6, wherein the first data transmission mode information or the second data transmission mode information comprises at least one of the following:
first information, wherein the first information indicates whether to perform packet data convergence protocol PDCP re-establishment;
second information, wherein the second information indicates whether to perform PDCP data recovery; or
third information, wherein the third information indicates whether to send a random access preamble to a target cell to obtain uplink synchronization information for the target cell.

8. The method according to any one of claims 1 to 7, wherein the cell handover of the first type is a cell handover that is based on a beam-level measurement result.

9. A communication method, wherein the method is applied to a terminal device or a module in the terminal device, and comprises:
determining that a first cell is a serving cell of the terminal device; and
receiving N sets of data transmission mode information from an access network device in the first cell, wherein N is a positive integer, wherein
the N sets of data transmission mode information comprise first data transmission mode information corresponding to performing a handover of the terminal device from a second cell to the first cell through a cell handover of a first type and/or second data transmission mode information corresponding to performing a handover of the terminal device from the second cell to a third cell through the cell handover of the first type, and the first cell, the second cell, and the third cell are cells managed by the access network device.

10. The method according to claim 9, wherein after the terminal device is handed over from the first cell to the second cell through the cell handover of the first type, the method further comprises:
receiving first indication information from the access network device in the second cell, wherein the first indication information indicates the terminal device to perform data transmission with the access network device based on the first data transmission mode information in the N sets of data transmission mode information after the terminal device is handed over from the second cell to the first cell through the cell handover of the first type; or
receiving second indication information from the access network device in the second cell, wherein the second indication information indicates the terminal device to perform data transmission with the access network device based on the second data transmission mode information in the N sets of data transmission mode information after the terminal device is handed over from the second cell to the third cell through the cell handover of the first type.

11. The method according to claim 9 or 10, wherein the method further comprises:
sending third indication information and fourth indication information to the access network device in the first cell after the terminal device is handed over from the second cell to the first cell, wherein the third indication information indicates that the terminal device has been handed over from the second cell to the first cell through the cell handover of the first type, and the fourth indication information indicates the access network device to perform data transmission with the terminal device based on the first data transmission mode information in the N sets of data transmission mode information; or
sending fifth indication information and sixth indication information to the access network device in the third cell after the terminal device is handed over from the second cell to the third cell, wherein the fifth indication information indicates that the terminal device has been handed over from the second cell to the third cell through the cell handover of the first type, and the sixth indication information indicates the access network device to perform data transmission with the terminal device based on the second data transmission mode information in the N sets of data transmission mode information.

12. The method according to any one of claims 9 to 11, wherein the method further comprises:
receiving seventh indication information from the access network device, wherein the seventh indication information indicates the terminal device to release the N sets of data transmission mode information.

13. The method according to any one of claims 9 to 12, wherein the determining that a first cell is a serving cell of the terminal device comprises:
when the terminal device accesses the first cell in idle mode or inactive mode, determining that the first cell is the serving cell of the terminal device; or
when the terminal device is handed over to the first cell through a cell handover of a second type, determining that the first cell is the serving cell of the terminal device.

14. The method according to claim 12 or 13, wherein the cell handover of the second type is a cell handover that is based on a cell-level measurement result.

15. The method according to any one of claims 9 to 14, wherein the first data transmission mode information or the second data transmission mode information comprises at least one of the following:
first information, wherein the first information indicates whether to perform PDCP re-establishment;
second information, wherein the second information indicates whether to perform PDCP data recovery; or
third information, wherein the third information indicates whether to send a random access preamble to a target cell to obtain uplink synchronization information for the target cell.

16. The method according to any one of claims 9 to 15, wherein the cell handover of the first type is a cell handover that is based on a beam-level measurement result.

17. A communication method, wherein the method is applied to an access network device or a module in the access network device, and comprises:
determining that a first cell is a serving cell of a terminal device; and
sending cell group information of W cells to the terminal device in the first cell, wherein the W cells comprise the first cell, wherein
the cell group information is for determining a data transmission mode corresponding to performing a handover of the terminal device from one cell in the W cells to another cell in the W cells through a cell handover of a first type, wherein W is an integer greater than 1.

18. The method according to claim 17, wherein the cell group information comprises PDCP-layer group information, the PDCP-layer group information indicates at least one PDCP group, and each of the at least one PDCP group comprises at least one of the W cells; and
when the one cell and the another cell are not in a same PDCP group, the data transmission mode comprises performing PDCP data recovery; or
when the one cell and the another cell are in a same PDCP group, the data transmission mode comprises skipping performing PDCP data recovery.

19. The method according to claim 17 or 18, wherein the cell group information comprises RLC-layer group information, the RLC-layer group information indicates at least one RLC group, and each of the at least one RLC group comprises at least one of the W cells; and
when the one cell and the another cell are not in a same RLC group, the data transmission mode comprises performing RLC re-establishment; or
when the one cell and the another cell are in a same RLC group, the data transmission mode comprises skipping performing RLC re-establishment.

20. The method according to claim 17, wherein the cell group information indicates at least one group, and each of the at least one group comprises at least one of the W cells; and
when the one cell and the another cell are not in a same group, the data transmission mode comprises performing PDCP data recovery and RLC re-establishment; or
when the one cell and the another cell are in a same group, the data transmission mode comprises performing PDCP maintenance and RLC maintenance.

21. The method according to any one of claims 17 to 20, wherein the cell group information comprises first MAC-layer group information, the first MAC-layer group information indicates at least one first MAC group, and each of the at least one first MAC group comprises at least one of the W cells; and
when the one cell and the another cell are not in a same first MAC group, the data transmission mode comprises performing random access; or
when the one cell and the another cell are in a same first MAC group, the data transmission mode comprises skipping performing random access.

22. The method according to any one of claims 17 to 21, wherein the cell group information comprises second MAC-layer group information, the second MAC-layer group information indicates at least one second MAC group, and each of the at least one second MAC group comprises at least one of the W cells; and
when the one cell and the another cell are not in a same second MAC group, the data transmission mode comprises performing MAC reset; or
when the one cell and the another cell are in a same second MAC group, the data transmission mode comprises performing MAC partial reset or maintenance.

23. The method according to claim 17, wherein the cell group information indicates at least one group, and each of the at least one group comprises at least one of the W cells; and
when the one cell and the another cell are not in a same group, the data transmission mode comprises performing at least one of PDCP data recovery, RLC re-establishment, or MAC reset; or
when the one cell and the another cell are in a same group, the data transmission mode comprises performing at least one of PDCP maintenance, RLC maintenance, or MAC partial reset.

24. The method according to claim 23, wherein the method further comprises:
receiving configuration information from the access network device, wherein the configuration information is for configuring a corresponding data transmission mode applied when the one cell and the another cell are not in the same group and/or a corresponding data transmission mode applied when the one cell and the another cell are in the same group.

25. The method according to any one of claims 17 to 24, wherein the method further comprises:
determining that at least one of the following is met: the terminal device needs to enter an idle mode or an inactive mode, the terminal device needs to be handed over to a cell other than the W cells through a cell handover of a second type, or the cell group information needs to be changed; and
releasing the cell group information, and/or indicating the terminal device to release the cell group information.

26. The method according to any one of claims 17 to 25, wherein the determining that a first cell is a serving cell of a terminal device comprises:
when the terminal device accesses the first cell in idle mode or inactive mode, determining that the first cell is the serving cell of the terminal device; or
when the terminal device is handed over to the first cell through the cell handover of the second type, determining that the first cell is the serving cell of the terminal device.

27. A communication method, wherein the method is applied to a terminal device or a module in the terminal device, and comprises:
receiving cell group information of W cells from an access network device in a first cell, wherein the W cells comprise the first cell; and
determining, based on the cell group information, a data transmission mode corresponding to performing a handover of the terminal device from one cell in the W cells to another cell in the W cells through a cell handover of a first type, wherein W is an integer greater than 1.

28. The method according to claim 27, wherein the cell group information comprises PDCP-layer group information, the PDCP-layer group information indicates at least one PDCP group, and each of the at least one PDCP group comprises at least one of the W cells; and
when the one cell and the another cell are not in a same PDCP group, the data transmission mode comprises performing PDCP data recovery; or
when the one cell and the another cell are in a same PDCP group, the data transmission mode comprises skipping performing PDCP data recovery.

29. The method according to claim 27 or 28, wherein the cell group information comprises RLC-layer group information, the RLC-layer group information indicates at least one RLC group, and each of the at least one RLC group comprises at least one of the W cells; and
when the one cell and the another cell are not in a same RLC group, the data transmission mode comprises performing RLC re-establishment; or
when the one cell and the another cell are in a same RLC group, the data transmission mode comprises skipping performing RLC re-establishment.

30. The method according to claim 27, wherein the cell group information indicates at least one group, and each of the at least one group comprises at least one of the W cells; and
when the one cell and the another cell are not in a same group, the data transmission mode comprises performing PDCP data recovery and RLC re-establishment; or
when the one cell and the another cell are in a same group, the data transmission mode comprises performing PDCP maintenance and RLC maintenance.

31. The method according to any one of claims 27 to 30, wherein the cell group information comprises first MAC-layer group information, the first MAC-layer group information indicates at least one first MAC group, and each of the at least one first MAC group comprises at least one of the W cells; and
when the one cell and the another cell are not in a same first MAC group, the data transmission mode comprises performing random access; or
when the one cell and the another cell are in a same first MAC group, the data transmission mode comprises skipping performing random access.

32. The method according to any one of claims 27 to 31, wherein the cell group information comprises second MAC-layer group information, the second MAC-layer group information indicates at least one second MAC group, and each of the at least one second MAC group comprises at least one of the W cells; and
when the one cell and the another cell are not in a same second MAC group, the data transmission mode comprises performing MAC reset; or
when the one cell and the another cell are in a same second MAC group, the data transmission mode comprises skipping performing MAC reset.

33. The method according to claim 27, wherein the cell group information indicates at least one group, and each of the at least one group comprises at least one of the W cells; and
when the one cell and the another cell are not in a same group, the data transmission mode comprises performing at least one of PDCP data recovery, RLC re-establishment, or MAC reset; or
when the one cell and the another cell are in a same group, the data transmission mode comprises performing at least one of PDCP maintenance, RLC maintenance, or MAC partial reset.

34. The method according to claim 33, wherein the method further comprises:
receiving configuration information from the access network device, wherein the configuration information is for configuring a corresponding data transmission mode applied when the one cell and the another cell are not in the same group and/or a corresponding data transmission mode applied when the one cell and the another cell are in the same group.

35. The method according to any one of claims 27 to 34, wherein the method further comprises:
determining that at least one of the following is met: the terminal device needs to enter an idle mode or an inactive mode, the terminal device needs to be handed over to a cell other than the W cells through a cell handover of a second type, or the cell group information needs to be changed; and
releasing the cell group information, and/or indicating the terminal device to release the cell group information.

36. A communication apparatus, comprising a module configured to perform the method according to any one of claims 1 to 35.

37. A communication apparatus, comprising a processor, wherein the processor is coupled to a memory, and the memory stores a computer program; and the processor is configured to invoke the computer program in the memory, to enable the communication apparatus to perform the method according to any one of claims 1 to 35.

38. A communication apparatus, comprising a processor and an interface circuit, wherein the interface circuit is configured to: receive a signal from a communication apparatus other than the communication apparatus and transmit the signal to the processor, or send, to a communication apparatus other than the communication apparatus, a signal that is from the processor; and the processor is configured to implement the method according to any one of claims 1 to 35 by using a logic circuit or by executing code instructions.

39. A communication system, wherein the communication system comprises an access network device and a terminal device, wherein
the access network device is configured to perform the method according to any one of claims 1 to 8, and the terminal device is configured to perform the method according to any one of claims 9 to 16; or
the access network device is configured to perform the method according to any one of claims 17 to 26, and the terminal device is configured to perform the method according to any one of claims 27 to 35.

40. A computer-readable storage medium, wherein the storage medium stores a computer program or instructions; and when the computer program or the instructions are executed by a computer, the method according to any one of claims 1 to 35 is implemented.

41. A computer program product, wherein when a computer reads and executes the computer program product, the computer is enabled to perform the method according to any one of claims 1 to 35.
